(19) Europäisches Patentamt
European Patent Office
Office européen des brevets

(11) EP 4 610 316 A1

(12) EUROPEAN PATENT APPLICATION

(43) Date of publication:
**03.09.2025 Bulletin 2025/36**

(21) Application number: **25158504.8**

(22) Date of filing: **18.02.2025**

(51) International Patent Classification (IPC):
***C09D 5/16*** *(2006.01)* ***B05D 7/00*** *(2006.01)*
***C09D 133/06*** *(2006.01)*

(52) Cooperative Patent Classification (CPC):
**C09D 5/1693; B05D 7/56; C09D 5/1675; C09D 133/066**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **29.02.2024 JP 2024030438**

(71) Applicant: **Chugoku Marine Paints, Ltd.**
**Hiroshima 739-0652 (JP)**

(72) Inventors:
- **TASHIRO, Shinichi**
  **Otake-shi, Hiroshima 739-0652 (JP)**
- **AOI, Atsushi**
  **Otake-shi, Hiroshima 739-0652 (JP)**

(74) Representative: **Hoffmann Eitle**
**Patent- und Rechtsanwälte PartmbB**
**Arabellastraße 30**
**81925 München (DE)**

# (54) COATING COMPOSITION

(57) Provided is a coating composition that forms a coating film having good adhesion to both an epoxy-based undercoat coating film and an old antifouling coating film that is a lower layer, and having good adhesion to an antifouling coating film formed from a silicone-based antifouling coating material that is an upper layer. A coating composition containing an acrylic resin (A) having an acid value and an epoxy group-containing silane coupling agent (B), in which the acid value of the acrylic resin (A) is 10 mgKOH/g or more and 35 mgKOH/g or less and a hydroxyl value of the acrylic resin (A) is 10 mgKOH/g or more and 200 mgKOH/g or less, a content of the acrylic resin (A) in solid content of the coating composition is 25% by mass or more and 50% by mass or less, and a content of the epoxy group-containing silane coupling agent (B) in the solid content of the coating composition is 6% by mass or more and 25% by mass or less.

EP 4 610 316 A1

## Description

Field of the Invention

The present invention relates to an antifouling coating composition, a coating film using the same, a substrate with an antifouling coating film having the coating film, and a method for producing the same.

Background of the Invention

Self-polishing antifouling coating compositions, which are applied to ships, undersea structures, fishing material, or the like to prevent fouling caused by attachment of aquatic organisms, prevent the attachment of organisms by gradually releasing an antifouling agent contained in a coating material.

On the other hand, silicone-based antifouling coating materials, which do not require the antifouling agent to exhibit antifouling property, have attracted attention as environmentally friendly antifouling coating materials.

For example, PTL 1 discloses an antifouling coating composition that is a curable organopolysiloxane composition.

Citation List

Patent Literature

PTL 1: JP-A-2017-088653

Summary of the Invention

Technical Problem

Conventionally, when forming an antifouling coating film formed from the silicone-based antifouling coating material such as the antifouling coating material described in PTL 1 on a substrate, an undercoat coating film formed from a two-pack curable type epoxy-based coating material is required, however, when using the two-pack curable type epoxy-based coating material as an undercoat layer, it is necessary to apply the silicone-based antifouling coating material quickly after forming the undercoat layer, which causes a problem of significant work restrictions.

Further, when attempting to apply a new silicone-based antifouling coating material on an old antifouling coating film formed from a self-polishing antifouling coating material, conventionally, the two-pack curable type epoxy-based coating material is applied as the undercoat layer on the old antifouling coating film, and then the silicone-based antifouling coating material is applied. However, since the two-pack curable type epoxy-based coating material has a high coating film hardness, there is a problem that a self-polishing antifouling coating film, which is a lower layer and has a low coating film hardness, breaks within the layer.

An object of the present invention is to provide a coating composition that forms a coating film having good adhesion to both an epoxy-based undercoat coating film and the old antifouling coating film that is the lower layer, and having good adhesion to the antifouling coating film formed from the silicone-based antifouling coating material that is an upper layer. A further object of the present invention is to provide a coating film formed from the coating composition, a substrate with an antifouling coating film having the coating film, and a method for producing the same.

Solution to Problem

As a result of intensive studies in view of the above problems, the present inventors have found that the above problems can be solved by a coating composition containing a specific amount of an acrylic resin (A) having a specific acid value and hydroxyl value, and further containing a specific amount of an epoxy group-containing silane coupling agent (B), and completed the present invention.

The present invention relates to the following [1] to [13].

[1] A coating composition containing an acrylic resin (A) having an acid value and an epoxy group-containing silane coupling agent (B), in which the acid value of the acrylic resin (A) is 10 mgKOH/g or more and 35 mgKOH/g or less and a hydroxyl value of the acrylic resin (A) is 10 mgKOH/g or more and 200 mgKOH/g or less, a content of the acrylic resin (A) in solid content of the coating composition is 25% by mass or more and 50% by mass or less, and a content of the epoxy group-containing silane coupling agent (B) in the solid content of the coating composition is 6% by mass or more and 25% by mass or less.

[2] The coating composition according to [1], in which an acid value of a solvent-soluble content of the coating composition is 2 mgKOH/g or more and 10 mgKOH/g or less.

[3] The coating composition according to [1] or [2], in which an active hydrogen equivalent (eq) of an epoxy curing agent to an epoxy group equivalent (eq) in the solid content of the coating composition (active hydrogen equivalent/epoxy group equivalent) is 0.05 or less.

[4] The coating composition according to any one of [1] to [3], in which the coating composition is for an undercoat layer of an antifouling coating composition containing a curable silicone.

[5] The coating composition according to [4], in which the curable silicone is at least one selected from the following (1) and (2):

(1) a polyorganosiloxane having a ketoxime group at both ends

(2) a polyorganosiloxane having a hydroxy group at both ends, and an organosilane represented by the following formula (I).

$$R^1_aSiX_{4-a} \qquad (I)$$

(In the formula (I), $R^1$ represents a substituted or unsubstituted hydrocarbon group having 1 or more and 10 or less carbon atoms, X is a ketoxime group, and a is 0 or 1.)

[6] The coating composition according to [5], in which the curable silicone is a curable silicone of the above (1).

[7] The coating composition according to any one of [4] to [6], in which the antifouling coating composition contains an amino group-containing silane coupling agent.

[8] The coating composition according to any one of [1] to [7], in which the coating composition is for an undercoat layer formed on a coating film selected from the group consisting of an old antifouling coating film and a single-pack type or a two-pack type epoxy-based undercoat coating film.

[9] A coating film formed from the coating composition according to any one of [1] to [8].

[10] A substrate with an antifouling coating film, including: a substrate; the coating film according to [9]; and an antifouling coating film formed from an antifouling coating composition containing a curable silicone, in this order.

[11] A substrate with an antifouling coating film, including: a substrate, a single-pack type or a two-pack type epoxy-based undercoat coating film, optionally an old antifouling coating film, the coating film according to [9], and an antifouling coating film formed from an antifouling coating composition containing a curable silicone, in this order.

[12] A method for producing a substrate with an antifouling coating film, including the following steps (1) to (4):

a step (1) of applying or impregnating a substrate with the coating composition according to any one of [1] to [8] to obtain an applied body or an impregnated body;

a step (2) of drying the applied body or the impregnated body obtained in the step (1) to form a coating film;

a step (3) of applying or impregnating the coating film with an antifouling coating composition containing a curable silicone to obtain an applied body or an impregnated body; and

a step (4) of drying and curing the applied body or the impregnated body obtained in the step (3) to form a coating film.

[13] Use of the coating composition according to any one of [1] to [8] for an undercoat layer of an antifouling coating composition containing a curable silicone.

## Advantageous Effects of Invention

According to the present invention, there is provided a coating composition that forms a coating film having good adhesion to both the epoxy-based undercoat coating film and the old antifouling coating film that is the lower layer, and having good adhesion to the antifouling coating film formed from the silicone-based antifouling coating material that is the upper layer. The present invention further provides a coating film formed from the coating composition, a substrate with an antifouling coating film having the coating film, and a method for producing the same.

## Detailed Description of the Invention

A coating composition of the present invention, an antifouling coating film using the same, and a substrate with an antifouling coating film and a method for producing the same will be described in detail below.

[Coating composition]

The coating composition of the present invention is a coating composition containing an acrylic resin (A) having an acid value and an epoxy group-containing silane coupling agent (B), in which the acid value of the acrylic resin (A) is 10 mgKOH/g or more and 35 mgKOH/g or less and a hydroxyl value of the acrylic resin (A) is 10 mgKOH/g or more and 200 mgKOH/g or less, the content of the acrylic resin (A) in solid content of the coating composition is 25% by mass or more and 50% by mass or less, and the content of the epoxy group-containing silane coupling agent (B) in the solid content of the coating composition is 6% by mass or more and 25% by mass or less.
According to the present invention, there is provided a coating composition that forms a coating film having good adhesion to both an epoxy-based undercoat coating film and an old antifouling coating film that is the lower layer, and having good adhesion to an antifouling coating film formed from a silicone-based antifouling coating material that is an upper layer.
Detailed reasons why the above effects are obtained are unknown, but some of the reasons are thought to be as follows.
It is considered that the coating composition of the present embodiment contains the epoxy group-containing silane coupling agent (B), which provides good adhesion to the epoxy-based undercoat coating film. Further, when the old antifouling coating film contains an acrylic resin, it is considered that the coating composition of the present embodiment contains the acrylic resin (A), which provides good adhesion.
It is further considered that since the coating composition of the present embodiment contains the acrylic resin (A) having a specific acid value and hydroxyl value, and the epoxy group-containing silane coupling agent (B), interaction between these contributes to good adhesion to the antifouling coating film formed from the silicone-based antifouling coating material that is the upper layer.
Note that a mechanism by which effects of the present invention are obtained is not limited to the above.
The coating composition of the present embodiment is described in detail below.

[Acrylic resin (A) having acid value]

The coating composition of the present embodiment contains the acrylic resin (A) having an acid value (hereinafter, also simply referred to as the "acrylic resin (A)"). Note that the acrylic resin (A) is a resin having a structural unit derived from at least one selected from (meth)acrylic acid and its ester compound.
The acid value of the acrylic resin (A) is 10 mgKOH/g or more and 35 mgKOH/g or less, preferably 10.5 mgKOH/g or more, more preferably 11 mgKOH/g or more, and preferably 30 mgKOH/g or less, more preferably 25 mgKOH/g or less, still more preferably 20 mgKOH/g or less, still more preferably 15 mgKOH/g or less, from the viewpoint of adhesion to the lower and upper layers.
The acid value of the acrylic resin (A) can be appropriately adjusted by adjusting the content of structural units derived from monomers having an acid group in structural units constituting the acrylic resin (A).
The acid group possessed by the acrylic resin (A) is not particularly limited, and it is preferable that the acrylic resin (A) has a carboxy group.
The acid value of the acrylic resin (A) is measured by a method described in Examples.
Further, from the viewpoint of adhesion to the upper layer and water resistance, the hydroxyl value of the acrylic resin (A) is 10 mgKOH/g or more and 200 mgKOH/g or less, preferably 20 mgKOH/g or more, more preferably 30 mgKOH/g or more, still more preferably 40 mgKOH/g or more, and preferably 170 mgKOH/g or less, more preferably 150 mgKOH/g or less, still more preferably 130 mgKOH/g or less, still more preferably 120 mgKOH/g or less, still more preferably 110 mgKOH/g or less, still more preferably 100 mgKOH/g or less, still more preferably 90 mgKOH/g or less, still more preferably 80 mgKOH/g or less, still more preferably 70 mgKOH/g.
The hydroxyl value of the acrylic resin (A) can be appropriately adjusted by adjusting the content of structural units derived from monomers having a hydroxy group in the structural units constituting the acrylic resin (A).
The hydroxyl value of the acrylic resin (A) is measured by a method described in Examples.
The acrylic resin (A) preferably has a structural unit derived from a monomer selected from the group consisting of (meth)acrylic acid, derivatives of (meth)acrylic acid, and other monomers.
Note that in this specification, "(meth)acrylic acid" means "acrylic acid or methacrylic acid", and "(meth)acrylate" means "acrylate or methacrylate".
From the viewpoint of setting the acid value in the desired range, the acrylic resin (A) preferably has a structural unit derived from (meth)acrylic acid.
Examples of the (meth)acrylic acid derivatives include:

aliphatic or alicyclic (meth)acrylic acid esters, in which alkyl or cycloalkyl group has about 1 or more and 30 or less carbon atoms (about C6 to C30 for cycloalkyl groups), and some of hydrogen atoms (H) contained in the alkyl or

cycloalkyl group may be substituted with aromatic groups such as phenyl group, or alkoxy groups having about 1 or more and 3 or less carbon atoms, such as methyl (meth)acrylate, ethyl (meth)acrylate, n-propyl (meth)acrylate, i-propyl (meth)acrylate, n-butyl (meth)acrylate, i-butyl (meth)acrylate, t-butyl (meth)acrylate, 2-ethylhexyl (meth) acrylate, n-octyl (meth)acrylate, cyclohexyl (meth)acrylate, stearyl (meth)acrylate, lauryl (meth)acrylate, benzyl (meth)acrylate, dodecyl (meth)acrylate, and methoxyethyl (meth)acrylate;
hydroxyalkyl (meth)acrylates (OH group-containing unsaturated monomers), in which some of hydrogen atoms (H) in an alkyl group (about C1 to C5) are substituted with OH groups, such as hydroxyethyl (meth)acrylate, 3-hydroxypropyl (meth)acrylate, and 2-hydroxypropyl (meth)acrylate; and
silicon-containing (meth)acrylates (silicon-containing unsaturated monomers) such as (meth)acryloxypropyl polydimethylsiloxane.

Among these (meth)acrylic acid derivatives, it is preferable to contain one or more selected from aliphatic or alicyclic (meth)acrylic acid esters and hydroxyalkyl (meth)acrylates, in terms of excellent adhesion to the lower and upper layers.

Examples of other monomers include:

styrenes such as styrene and α-methylstyrene;
vinyl esters such as vinyl acetate and vinyl propionate;
vinyl ethers such as ethyl vinyl ether and isobutyl vinyl ether; and
dibasic unsaturated monomers such as itaconic acid, maleic acid, and fumaric acid.

In the present embodiment, it is preferable that the acrylic resin (A) has structural units derived from styrenes, structural units derived from hydroxyalkyl (meth)acrylates, structural units derived from (meth)acrylic acid, and structural units derived from (meth)acrylic acid alkyl esters, from the viewpoint of obtaining a coating film having a desired acid value and hydroxyl value and excellent adhesion to the lower and upper layers.

That is, in the present embodiment, it is preferable that the acrylic resin (A) is an acrylic resin obtained by copolymerizing styrenes, hydroxyalkyl (meth)acrylates, (meth)acrylic acid, and (meth)acrylic acid alkyl esters. Note that each of the monomers may be used alone or in combination of two or more thereof.

As styrenes, styrene is preferred, and the content of styrenes in raw material monomers of the acrylic resin (A) is preferably 0.5% by mass or more and 60% by mass or less.

The number of carbon atoms in the alkyl group of the hydroxyalkyl (meth)acrylate is preferably 2 or more and 12 or less, more preferably 10 or less, still more preferably 8 or less, still more preferably 6 or less, still more preferably 4 or less, and still more preferably 2 or 3. The number of hydroxy groups in one molecule of the hydroxyalkyl (meth)acrylate is preferably 1 to 3, more preferably 1 or 2, and still more preferably 1. Preferred examples of the hydroxyalkyl (meth)acrylate include hydroxyethyl (meth)acrylate, hydroxypropyl (meth)acrylate, and hydroxybutyl (meth)acrylate, and among them, 2-hydroxyethyl (meth)acrylate is more preferred, and 2-hydroxyethyl methacrylate is still more preferred.

The content of hydroxyalkyl (meth)acrylate in the raw material monomers of the acrylic resin (A) is preferably 5% by mass or more and 25% by mass or less, more preferably 7% by mass or more, and more preferably 20% by mass or less, and still more preferably 15% by mass or less, from the viewpoint of obtaining a desired hydroxyl value.

The (meth)acrylic acid is at least one selected from acrylic acid and methacrylic acid, and is preferably methacrylic acid.

The content of (meth)acrylic acid in the raw material monomers of the acrylic resin (A) is preferably 1.5% by mass or more and 5.5% by mass or less, more preferably 5.0% by mass or less, and still more preferably 4.5% by mass or less, from the viewpoint of obtaining the desired acid value.

The number of carbon atoms in the alkyl group of the (meth)acrylic acid alkyl ester is preferably 1 or more and 16 or less, more preferably 12 or less, still more preferably 8 or less, still more preferably 6 or less, and still more preferably 4 or less. Preferred examples of the (meth)acrylic acid alkyl ester include methyl (meth)acrylate, ethyl (meth)acrylate, propyl (meth)acrylate, and butyl (meth)acrylate. Note that propyl (meth)acrylate may be n-propyl (meth)acrylate or isopropyl (meth)acrylate, but from the viewpoint of availability and the like, n-propyl (meth)acrylate is preferable. Further, butyl (meth)acrylate may be any of n-butyl (meth)acrylate, isobutyl (meth)acrylate, and t-butyl (meth)acrylate, but from the viewpoint of availability and viscosity of the resulting acrylic resin (A), n-butyl (meth)acrylate is preferable.

The content of (meth)acrylic acid alkyl ester in the raw material monomers of the acrylic resin (A) is preferably 10% by mass or more and 90% by mass or less, more preferably 20% by mass or more, and still more preferably 30% by mass or more.

The content of the acrylic resin (A) in the solid content of the coating composition is 25% by mass or more and 60% by mass or less, preferably 55% by mass or less, more preferably 50% by mass or less, still more preferably 44% by mass or less, and still more preferably 42% by mass or less, from the viewpoint of adhesion to the lower and upper layers.

A weight average molecular weight of the acrylic resin (A) is not particularly limited as long as it is 1,000 or more,

and from the viewpoint of strength of the coating film and coating viscosity, it is preferably 3,000 or more and 500,000 or less, more preferably 5,000 or more, still more preferably 7,000 or more, and more preferably 300,000 or less, still more preferably 150,000 or less, still more preferably 75,000 or less, still more preferably 50,000 or less.

In the present invention, the "weight average molecular weight (Mw)" is measured using gel permeation chromatography (GPC) and calculated in terms of standard polystyrene having a known molecular weight. Specifically, it is measured by a method described in Examples.

The coating composition of the present embodiment may contain other resins as resin components in addition to the acrylic resin (A). Examples of the other resins include resins other than acrylic resins, acrylic resins having an acid value of less than 10 mgKOH/g, acrylic resins having an acid value of more than 35 mgKOH/g, acrylic resins having a hydroxyl value of less than 10 mgKOH/g, and acrylic resins having a hydroxyl value of more than 200 mgKOH/g.

Examples of the resins other than the acrylic resins include vinyl resins, and specific examples thereof include resins having structural units derived from vinyl chloride, vinyl acetate, and vinyl alcohol.

As the other resins, commercially available products may be used, and examples thereof include Solvine C series, A series, TA3 series, and M series (all manufactured by Nissin Chemical Industry Co., Ltd.).

The content of the other resins is not particularly limited, and is preferably 200 parts by mass or less, more preferably 150 parts by mass or less, still more preferably 100 parts by mass or less, and still more preferably 85 parts by mass or less relative to 100 parts by mass of the acrylic resin (A).

[Epoxy group-containing silane coupling agent (B)]

The coating composition of the present embodiment contains the epoxy group-containing silane coupling agent (B). By containing the acrylic resin (A) and the epoxy group-containing silane coupling agent (B), a coating film with excellent adhesion to the lower and upper layers is obtained.

Specific examples of the epoxy group-containing silane coupling agent include glycidoxymethyl trimethoxysilane, glycidoxymethyl triethoxysilane, 2-glycidoxyethyl trimethoxysilane, 2-glycidoxyethyl triethoxysilane, 3-glycidoxypropyl trimethoxysilane, 3-glycidoxypropyl triethoxysilane, 3-glycidoxypropylmethyl dimethoxysilane, 3-glycidoxypropylmethyl diethoxysilane, 3-glycidoxypropyldimethyl methoxysilane, 3-glycidoxypropyl(ethyl) dimethoxysilane, 2-(3,4-epoxycyclohexyl)ethyl trimethoxysilane, 2-(3,4-epoxycyclohexyl)ethyl triethoxysilane, 8-glycidoxyoctyl trimethoxysilane, 8-glycidoxyoctylmethyl dimethoxysilane, and 8-glycidoxyoctylmethyl diethoxysilane.

As the silane coupling agent, commercially available products may be used, and examples thereof include 3-glycidoxypropyl trimethoxysilane "KBM-403" (manufactured by Shin-Etsu Chemical Co., Ltd.) and "Sila-Ace S-510" (manufactured by JNC Corporation).

The content of the epoxy group-containing silane coupling agent (B) in the solid content of the coating composition is 6% by mass or more and 25% by mass or less, preferably 7% by mass or more, more preferably 8% by mass, and preferably 20% by mass or less, more preferably 15% by mass or less, from the viewpoint of adhesion to the lower and upper layers and film formability.

[Pigment (C)]

The coating composition of the present embodiment may contain a pigment, and examples of the pigment include filler pigments, coloring pigments, and whiskers.

From the viewpoint of improving the strength of the coating film, it is preferable to contain the filler pigment.

Examples of the filler pigment include talc, mica, and wollastonite which are flat, scaly, or needle-shaped pigments. These are pigments having a relatively large oil absorption capacity, can impart viscosity to the coating composition, and can provide anti-sagging properties to the coating composition. Further, mica, wollastonite, and the like impart strength to the coating film. Furthermore, talc can reduce internal stress of the coating film and prevent the coating film from cracking.

The coating composition of the present embodiment may be added with, as the filler pigments, potassium feldspar, silica powder, settling barium sulfate, elutriated barium sulfate, titanium oxide (also known as titanium white), zinc oxide, calcium carbonate, aluminum hydroxide, carbon black, alumina, and the like.

The coating composition of the present embodiment may be added with, as the coloring pigments, inorganic pigments such as titanium oxide, red iron oxide, yellow iron oxide, black iron oxide, and carbon black, and organic pigments such as naphthol red and phthalocyanine blue.

In order to improve crack resistance performance, the coating composition of the present embodiment may be added with, for example, the whiskers such as basic magnesium sulfate, potassium titanate, sepiolite, and xonotlite in addition to the wollastonite described above.

The content of the pigment (C) in the solid content of the coating composition is, from the viewpoint of providing a viscosity suitable for the coating and of improving the strength of the coating film, preferably 10% by mass or more and 69%

by mass or less, more preferably 20% by mass or more, still more preferably 30% by mass or more, still more preferably 35% by mass or more, and more preferably 65% by mass or less, still more preferably 60% by mass or less, still more preferably 50% by mass or less.

[Thixotropic agent (D)]

The coating composition of the present embodiment preferably contains a thixotropic agent for the purpose of improving the anti-sagging properties of the coating and preventing settling.
Examples of the thixotropic agent (anti-sagging agent, anti-settling agent) include: salts selected from the group consisting of organic bentonite, amine salts of Al, Ca, and Zn, stearate salts, lecithin salts, and alkylsulfonate salts; a wax selected from the group consisting of polyethylene wax, oxidized polyethylene wax, amide wax, hydrogenated castor oil wax, and polyamide wax; and synthetic fine silica.
The thixotropic agent (anti-sagging agent, anti-settling agent) may be a commercially available product, and examples of the commercially available product include amide-based thixotropic agents "Disparlon A630-20X", "Disparlon 4200-20", and "Disparlon 6650" (all manufactured by Kusumoto Chemicals, Ltd.), "A-S-A T-250F" (manufactured by Itoh Oil Chemicals Co., Ltd.), and "Flownon RCM-300TL" (manufactured by Kyoeisha Chemical Co., Ltd.), an organically modified bentonite-based viscosity modifier (hectorite/quaternary amine) "Bentone 38" (manufactured by Elements Specialties Inc.), a silicon dioxide-based thixotropic agent "Aerosil R972" (manufactured by Nippon Aerosil Co., Ltd.), and an oxidized polyethylene-based thixotropic agent "A-S-AD-120" (manufactured by Itoh Oil Chemicals Co., Ltd.).
The thixotropic agent is used for the purposes of preventing precipitation of solid materials such as the pigment (C) during storage of the coating composition and of improving coating workability during coating.
The content of the thixotropic agent in the solid content of the coating composition is preferably 0.1% by mass or more and 20% by mass or less, more preferably 0.3% by mass or more, still more preferably 0.5% by mass or more, and more preferably 10% by mass or less, still more preferably 5% by mass or less, still more preferably 3% by mass or less.

[Organic solvent (E)]

The coating composition of the present embodiment may contain an organic solvent (E) to keep the viscosity of the coating composition low and improve the coating workability.
Examples of the organic solvent (E) include aromatic hydrocarbon-based organic solvents, aliphatic hydrocarbon-based organic solvents, alicyclic hydrocarbon-based organic solvents, ketone-based organic solvents, ester-based organic solvents, ether-based organic solvents, and alcohol-based organic solvents, and the aromatic hydrocarbon-based organic solvents and the ketone-based organic solvents are preferred, and the aromatic hydrocarbon-based organic solvents are more preferred.
Examples of the aromatic hydrocarbon-based organic solvents include toluene, xylene, mesitylene, Solvesso (registered trademark) 100, Solvesso 150, and Solvesso 200.
Examples of the aliphatic hydrocarbon-based organic solvents include pentane, hexane, heptane, and octane.
Examples of the alicyclic hydrocarbon-based organic solvents include cyclohexane, methylcyclohexane, and ethylcyclohexane.
Examples of the ketone-based organic solvents include acetyl acetone, acetone, methyl ethyl ketone, methyl isobutyl ketone, and dimethyl carbonate, and the dimethyl carbonate is preferred.
Examples of the ester-based organic solvents include ethyl acetate, propyl acetate, butyl acetate, and propylene glycol monomethyl ether acetate.
Examples of the ether-based organic solvents include butyl cellosolve.
Examples of the alcohol-based organic solvents include alcohol-based organic solvents such as isopropanol, isobutyl alcohol, n-butanol, and methoxypropanol.
The organic solvent (E) may be used alone or in combination of two or more.
When the coating composition of the present embodiment contains the organic solvent (E), the content of the organic solvent (E) in the coating composition is preferably 10% by mass or more and 70% by mass or less, more preferably 20% by mass or more, and still more preferably 30% by mass or more, and more preferably 60% by mass or less, from the viewpoint of improving the coating workability and suppressing sagging during coating and reducing environmental load.

[Other Components]

In addition to components described above, the coating composition of the present embodiment may appropriately contain known components contained in the coating composition, such as an antifoaming agent, a dispersant/emulsifier, and an antifouling agent.

As the antifoaming agent, a fluorine-based, silicone-based, acrylic, or other antifoaming agent may be used. In addition, two or more types of antifoaming agents may be used in combination. As the antifoaming agent, the commercially available products may be used, and examples thereof include "BYK-011" and "BYK-012" manufactured by BYK Japan KK.

When the coating composition of the present embodiment contains the antifoaming agent, the content of the antifoaming agent relative to 100 parts by mass of the solid content of the coating composition is preferably 0.0001% by mass or more and 5% by mass or less, more preferably 0.0003% by mass or more, still more preferably 0.001% by mass or more, and more preferably 2% by mass or less, still more preferably 0.5% by mass or less.

The coating composition of the present embodiment may contain the dispersant/emulsifier, and preferably contains the dispersant/emulsifier to improve dispersibility of the pigments and the like in the coating composition and to emulsify the pigments.

Examples of the dispersant/emulsifier include nonionic surfactants and anionic surfactants. Examples of the nonionic surfactants include polyoxyethylene alkyl ethers, polyoxyethylene oxypropylene alkyl ethers, polyoxyethylene alkyl phenyl ethers, polyoxyethylene oxypropylene alkyl phenyl ethers, polyoxyethylene distyryl phenyl ethers, polyoxyethylene oxypropylene distyryl phenyl ethers, and polyoxyethylene tristyryl phenyl ethers, and two or more thereof may be used in combination.

Examples of the anionic surfactants include sulfate ester salts and phosphate ester salts of the nonionic surfactants, polyoxyethylene alkyl ether carboxylates, alkyl benzene sulfonates, and alkyl naphthalene sulfonates, and two or more thereof may be used in combination.

A polymer dispersant may be used as the dispersant/emulsifier. Examples of the polymer dispersant include: (meth)acrylic resins such as poly(meth)acrylic acid, (meth)acrylic acid-acrylonitrile copolymer, (meth)acrylic acid-(meth) acrylic acid ester copolymer, vinyl acetate-(meth)acrylic acid ester copolymer, vinyl acetate-(meth)acrylic acid copolymer, and vinylnaphthalene-(meth)acrylic acid copolymer, and salts thereof; styrene-based resins such as styrene-(meth) acrylic acid copolymer, styrene-(meth)acrylic acid-(meth)acrylic acid ester copolymer, styrene-$\alpha$-methylstyrene-(meth) acrylic acid copolymer, styrene-$\alpha$-methylstyrene-(meth)acrylic acid-(meth)acrylic acid ester copolymer, styrene-maleic acid copolymer, and styrene-maleic anhydride copolymer, and salts thereof; urethane-based resins which are straight-chain and/or branched polymeric compounds (resins) containing urethane bonds formed by a reaction between an isocyanate group and a hydroxy group, and which may or may not have a crosslinked structure, and salts thereof; polyvinyl alcohols; vinyl naphthalene-maleic acid copolymers and salts thereof; vinyl acetate-maleic acid ester copolymers and salts thereof; and water-soluble resins such as vinyl acetate-crotonic acid copolymers and salts thereof.

As the dispersant/emulsifier, known products may be used, and examples thereof include DISPER BYK-187, DISPER BYK-190, DISPER BYK-191, DISPER BYK-194N, and DISPER BYK-199 (manufactured by BYK-Chemie GmbH), Aron A-210 and A6114 (manufactured by Toagosei Co., Ltd.), and DKS-NL100 (manufactured by DKS Co., Ltd.).

The content of the dispersant/emulsifier in the solid content of the coating composition is preferably 0.01% by mass or more and 5% by mass or less, more preferably 0.05% by mass or more, still more preferably 0.15% by mass or more, and more preferably 3% by mass or less, still more preferably 1% by mass or less.

In the coating composition of the present embodiment, it is preferable that the content of epoxy curing agent which reacts with an epoxy group of the epoxy group-containing silane coupling agent (B) is low. That is, it is preferable that the epoxy group in the epoxy group-containing silane coupling agent (B) of the present embodiment remain unreacted. Note that the acrylic resin (A) does not correspond to the epoxy curing agent.

An active hydrogen equivalent (eq) of the epoxy curing agent relative to an epoxy group equivalent (eq) in the solid content of the coating composition of the present embodiment (active hydrogen equivalent of epoxy curing agent/epoxy group equivalent) is preferably 0.05 or less, more preferably 0.03 or less, still more preferably 0.01 or less, and it is further more preferable that the coating composition does not contain the epoxy curing agent, that is the content of the epoxy curing agent is 0.

[Physical properties of coating composition]

<Acid value of solvent-soluble content>

An acid value of a solvent-soluble content of the coating composition of the present embodiment is preferably 2 mgKOH/g or more and 50 mgKOH/g or less, more preferably 30 mgKOH/g or less, and still more preferably 10 mgKOH/g or less, from the viewpoint of good adhesion to a topcoat silicone coating film.

The "acid value of the solvent-soluble content" in the present invention refers to an acid value of components (a mixture) soluble in a specific solvent described below in the solid content excluding volatile components in the coating composition. The components soluble in such a solvent are thought to be mainly components that form a continuous phase of the coating film such as resins and resin acids (rosin, versatic acid, or the like). The acid value of the solvent-soluble content is an average value of acid values of these components, and thus indicates an overall acid concentration of the

continuous phase of the coating film, and it is considered that since the acid value is within the above range, excellent effects described above can be obtained.

The acid value is defined as an amount (mg) of potassium hydroxide (KOH) required to neutralize 1 g of a target component, is expressed in units of mgKOH/g, and is a value that is widely used to indicate the acid group content of a target substance.

The acid value of the solvent-soluble content can be measured by, for example, a method conforming to JIS K 5601-2-1:1999 for the solvent-soluble content obtained by extracting the present composition with the solvent. As the solvent used for extraction, a xylene/ethanol mixed solution (xylene/ethanol = 70/30 (mass ratio), all of the mixed solutions below have this mass ratio) is generally used from the viewpoint of dissolving components such as resins forming the continuous phase of the present composition.

Specifically, the acid value of the solvent-soluble content can be measured by, for example, a method including the following steps (1) to (6).

(1) A weighed amount of the present composition and the xylene/ethanol mixed solution having a mass approximately 10 times that of the composition are placed in a centrifuge tube and mixed thoroughly.
(2) After centrifugation at 0°C and 3,500 rpm for 30 minutes, the supernatant is removed and transferred to another container.
(3) The same amount of the xylene/ethanol mixed solution as in (1) is added to the extraction residue again and mixed, centrifugation is performed under the same conditions as in (2), and the supernatant is removed and added to the container containing the first supernatant. This operation is repeated once more.
(4) The sum of the supernatants obtained from the three centrifugations is used as the extract, and % by mass of the solid content of this extract is measured. The % by mass of the solid content is determined by weighing a portion of the extract, drying the weighed extract in a hot air dryer at 108°C for 3 hours, measuring the mass of the remaining solid content, and calculating a ratio of the mass of the solid content in the weighed extract.
(5) About 5 g of the extract is placed in a beaker, the mass of the extract is measured, a value of % by mass of the solid content obtained in the above (4) is used to calculate the mass of the solvent-soluble content of a sample in the extract, and the calculated value is set as x. The extract is diluted with ethanol to a total volume of 50 mL.
(6) 2 drops of phenolphthalein-ethanol solution are added as an indicator to the ethanol diluted solution of the extract prepared in the above (5) and to 50 mL of ethanol that is a blank, and titrated with 0.1 mol/L potassium hydroxide-ethanol solution. The endpoint of the titration is when redness of the solution does not disappear for 30 seconds or more, and the acid value of the solvent-soluble content is calculated according to the following equation.

$$AV = \{(V_X - V_0)\times f\times 5.61\}/x$$

x: mass (g) of sample
Vx: titration volume (mL) for ethanol diluted solution
$V_0$: titration volume (mL) for blank
f: factor of 0.1 mol/L potassium hydroxide solution used in titration

Note that the solvent-soluble content can be extracted and its acid value can be measured not only from the coating composition but also from the formed coating film by the same method.

<Hydroxyl value of solvent-soluble content>

The hydroxyl value of the solvent-soluble content of the coating composition of the present embodiment is preferably 2 mgKOH/g or more and 100 mgKOH/g or less, more preferably 3 mgKOH/g or more, still more preferably 5 mgKOH/g or more, and more preferably 50 mgKOH/g or less, still more preferably 30 mgKOH/g or less, still more preferably 20 mgKOH/g or less, from the viewpoint of good adhesion to the topcoat silicone coating film and the water resistance of the coating film.

The "hydroxyl value of the solvent-soluble content" in the present invention refers to a hydroxyl value of components (a mixture) soluble in a specific solvent, obtained in the same manner as in measurement of the acid value of the solvent-soluble content.

The hydroxyl value of the solvent-soluble content is measured as follows.

The hydroxyl value is defined as the amount (mg) of potassium hydroxide (KOH) required to neutralize acetic acid bonded to the hydroxy group after acetylation 1 g of the target component, is expressed in units of mgKOH/g, and is a value that is widely used to indicate the hydroxy group content of the target substance.

The hydroxyl value of the solvent-soluble content can be measured by, for example, a method conforming to JIS K

0070:1992 for the solvent-soluble content obtained by extracting the present composition with the solvent. Methyl ethyl ketone is generally used as the solvent used for extraction from the viewpoint of dissolving the components such as resins forming the continuous phase of the present composition.

Specifically, the hydroxyl value of the solvent-soluble content can be measured by, for example, a method including the following steps (1) to (9).

(1) A weighed amount of the present composition and methyl ethyl ketone having a mass approximately 10 times that of the composition are placed in a centrifuge tube and mixed thoroughly.
(2) After centrifugation at 0°C and 3,500 rpm for 30 minutes, the supernatant is removed and transferred to another container.
(3) The same amount of methyl ethyl ketone as in (1) is added to the extraction residue again and mixed, centrifugation is performed under the same conditions as in (2), and the supernatant is removed and added to the container containing the first supernatant. This operation is repeated once more.
(4) The sum of the supernatants obtained from the three centrifugations is used as the extract, and % by mass of the solid content of this extract is measured. The % by mass of the solid content is determined by weighing a portion of the extract, drying the weighed extract in a hot air dryer at 108°C for 3 hours, measuring the mass of the remaining solid content, and calculating a ratio of the mass of the solid content in the weighed extract.
(5) About 5 g of the extract is placed in a flat-bottom flask and is added with 5 mL of an acetylation reagent (25 g of acetic anhydride added with pyridine to have a total volume of 100 mL). For a blank measurement, only the acetylation reagent is placed in a flat-bottom flask.
(6) A funnel is placed on a mouth of the flat-bottom flask and heat in an oil bath at about 100°C for 1 hour.
(7) After cooling, 1 mL of water is added through the funnel and shaken to decompose the acetic anhydride. Further, the flask is heated in the oil bath at about 100°C for 10 minutes.
(8) After cooling, the funnel and flask walls are washed with 5 mL of ethanol and 30 to 50 mL of tetrahydrofuran (THF).
(9) 2 to 3 drops of phenolphthalein indicator are added and titrated with 0.5 mol/L potassium hydroxide-ethanol solution. The endpoint of the titration is when redness of the solution does not disappear for 30 seconds or more, and the hydroxyl value of the solvent-soluble content is calculated according to the following equation.

$$A = [\{(V_0 - V_X)\times f\times 28.05\}/x] + AV$$

A: hydroxyl value
$V_0$: titration volume (mL) for blank
Vx: volume (mL) of 0.5 mol/L potassium hydroxide ethanol solution used in titration
f: factor of 0.5 mol/L potassium hydroxide ethanol solution used in titration
x: mass (g) of sample
AV: acid value

<Viscosity>

The viscosity of the coating composition of the present embodiment is preferably 60 KU or more and 85 KU or less, more preferably 63 KU or more, still more preferably 65 KU or more, and more preferably 80 KU or less, still more preferably 75 KU or less.

The viscosity of the coating composition is measured by a method described in Examples.

<VOC content>

The VOC (volatile organic compound) content of the coating composition of the present embodiment is preferably 700 g/L or less and 350 g/L or more, more preferably 650 g/L or less, and still more preferably 620 g/L or less, and more preferably 400 g/L or more, still more preferably 450 g/L or more. The VOC content of the coating composition of the present embodiment is preferably low from the viewpoint of reducing the environmental load and reducing workload, and is preferably 350 g/L or more from the viewpoint of setting the viscosity in the desired range.

The VOC content in the coating composition can be calculated from the composition of the coating composition and specific gravity of each component. Further, when measuring the VOC content of the obtained coating composition, it is measured in accordance with ISO 11890-1.

Note that each country specifies solvents that are exempt from VOCs, and for example, in the United States, dimethyl carbonate is an organic solvent exempt from VOCs.

[Applications of coating composition]

The coating composition of the present embodiment is preferably for an undercoat layer of an antifouling coating composition containing a curable silicone.

<Antifouling coating composition containing curable silicone>

The antifouling coating composition containing the curable silicone (hereinafter, also simply referred to as the antifouling coating composition) preferably contains at least one curable silicone (a) selected from the following (1) and (2).

(1) A polyorganosiloxane having a ketoxime group at both ends
(2) A polyorganosiloxane having a hydroxy group at both ends, and an organosilane represented by the following formula (I)

$$R^1{}_aSiX_{4-a} \qquad (I)$$

(In the formula (I), $R^1$ represents a substituted or unsubstituted hydrocarbon group having 1 or more and 10 or less carbon atoms, X is a ketoxime group, and a is 0 or 1.)

(Curable silicone (a))

The curable silicone (a) is selected from the above (1) or (2). From the viewpoint of curability, it is preferable that the curable silicone (a) is the curable silicone of the above (1). Each will be described in detail below.

«(1) Polyorganosiloxane having ketoxime group at both ends»

The polyorganosiloxane having a ketoxime group at both ends (hereinafter also referred to as "polyorganosiloxane (a1)") has at least a polyorganosiloxane structure that is a main chain and a reactive moiety having a ketoxime group, and has a reactive moiety at both ends.

The main chain has a polyorganosiloxane structure, and examples of the polyorganosiloxane structure include a polydimethylsiloxane structure and a polymethylphenylsiloxane structure, and among them, a polydimethylsiloxane structure is preferred. Note that in the main chain, an alkylene group, a polyoxyalkylene group, or the like may be present in a block form.

In addition, for example, the alkylene group, the polyoxyalkylene group, or the like may be present as a linking moiety between the main chain and the reactive moiety.

The reactive moieties form a crosslinking structure through a reaction of the reactive moieties of the polyorganosiloxane (a1) with one another or a reaction thereof with an organic silicone crosslinking agent (f) which will be described later contained in the antifouling coating composition, to be a silicone cured body to form the antifouling coating film. Further, the reactive moiety may also react with a silane coupling agent (g) which will be described later to form a part of the silicone cured body.

The reactive moieties preferably have a ketoxime silyl group, and positions thereof are preferably both ends of the main chain.

The polyorganosiloxane having a ketoxime group at both ends is preferably a compound represented by the following formula (II).

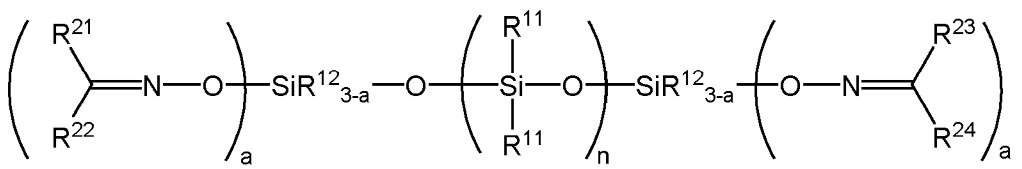

( II )

(In the formula (II), $R^{11}$ and $R^{12}$ each independently represent a hydrogen atom, or an alkyl group, an alkenyl group, an alkoxy group, an aryl group, an aralkyl group, or a halogenated alkyl group having 1 or more and 10 or less carbon atoms, $R^{21}$ to $R^{24}$ each independently represent an alkyl group having 1 or more and 4 or less carbon atoms; n represents an integer of 10 or more and 10,000 or less, and a represents an integer of 1 or more and 3 or less.)

In the formula (II), n represents an integer of 10 or more and 10,000 or less, preferably 100 or more and 1,000 or less, and can be appropriately selected so that the kinematic viscosity and weight average molecular weight which will be

described later are within suitable ranges.

a represents an integer of 1 or more and 3 or less, preferably 1 or 2, and more preferably 2.

$R^{11}$ and $R^{12}$ each independently represent a hydrogen atom, an alkyl group having 1 or more and 10 or less carbon atoms, an alkenyl group having 2 or more and 10 or less carbon atoms, an alkoxy group having 1 or more and 10 or less carbon atoms, an aryl group having 6 or more and 10 or less carbon atoms, an aralkyl group having 7 or more and 10 or less carbon atoms, or a halogenated alkyl group having 1 or more and 10 or less carbon atoms. Note that a plurality of the $R^{11}$'s may be the same as or different from one another, and when a plurality of the $R^{12}$'s are present, the $R^{12}$'s may be the same as or different from one another.

The number of carbon atoms of the alkyl group is preferably 1 or more and 6 or less, more preferably 1 or more and 3 or less, still more preferably 1 or 2, and still more preferably 1.

The number of carbon atoms of the alkenyl group is preferably 2 or more and 6 or less, more preferably 2 or more and 3 or less, and the alkenyl group is particularly preferably a vinyl group ($-CH=CH_2$).

The number of carbon atoms of the alkoxy group is preferably 1 or more and 6 or less, more preferably 1 or more and 3 or less, and still more preferably 1 or 2.

The number of carbon atoms of the aryl group is preferably 6 or more and 8 or less, the aryl group may have a substituent such as an alkyl group on an aromatic ring, and examples of the aryl group include a phenyl group, a tolyl group (methylphenyl group), a xylyl group (dimethylphenyl group), and a naphthyl group.

The number of carbon atoms of the aralkyl group is preferably 7 or more and 9 or less, and examples of the aralkyl group include a benzyl group, a 2-phenylethyl group, a 2-naphthylethyl group, and a diphenylmethyl group.

The number of carbon atoms of the halogenated alkyl group is preferably 1 or more and 6 or less, and examples of the halogenated alkyl group include a group obtained by substituting a part or all of the hydrogen atoms contained in the alkyl group with a halogen atom such as a fluorine atom, a chlorine atom, a bromine atom, or an iodine atom.

Among them, $R^{11}$ is preferably a methyl group, and $R^{12}$ is preferably a vinyl group.

In the formula (II), $R^{21}$ to $R^{24}$ each independently represent an alkyl group having 1 or more and 4 or less carbon atoms, and examples of such groups include a methyl group, an ethyl group, an n-propyl group, an isopropyl group, an n-butyl group, and an isobutyl group. Among them, the ketoxime group represented by $-O-N=C(R^{21}R^{22})$ or $-O-N=C(R^{23}R^{24})$ is preferably a dimethyl ketoxime group, a methyl ethyl ketoxime group, a diethyl ketoxime group, a methyl isopropyl ketoxime group, or a methyl isobutyl ketoxime group.

«(2) Polyorganosiloxane having hydroxy group at both ends, and organosilane represented by formula (I)»

The polyorganosiloxane having a hydroxy group at both ends (hereinafter also referred to as "polyorganosiloxane (a2)") has at least a polyorganosiloxane structure as the main chain and a reactive moiety having a hydroxy group, and has a reactive moiety at both ends.

The main chain has a polyorganosiloxane structure, and examples of the polyorganosiloxane structure include a polydimethylsiloxane structure and a polymethylphenylsiloxane structure, and among them, a polydimethylsiloxane structure is preferred. Note that in the main chain, an alkylene group, a polyoxyalkylene group, or the like may be present in a block form.

In addition, for example, the alkylene group, the polyoxyalkylene group, or the like may be present as a linking moiety between the main chain and the reactive moiety.

By a reaction of the silanol group with an organosilane represented by a formula (I) which will be described later (hereinafter also referred to as "organosilane (a3)"), a polyorganosiloxane (polyorganosiloxane (a1)) having a ketoxime group at both ends is obtained.

The polyorganosiloxane (a2) forms a crosslinking structure through a reaction of the reactive moieties of the polyorganosiloxane (a1) obtained by the above reaction with one another or a reaction thereof with an organic silicone crosslinking agent (f) which will be described later contained in the antifouling coating composition, to be the silicone cured body to form the antifouling coating film. Further, the polyorganosiloxane (a2) may also react with the silane coupling agent (g) which will be described later to form a part of the silicone cured body.

The polyorganosiloxane (a2) is preferably a compound represented by the following formula (III).

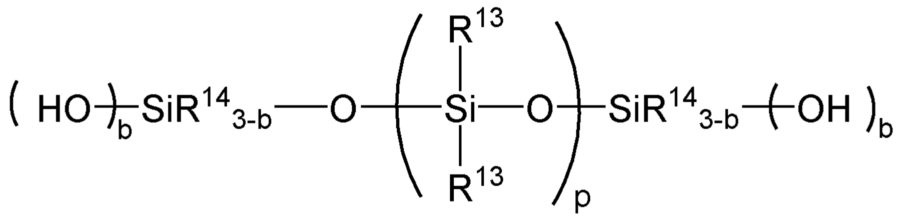 ( III )

(In the formula (III), p represents an integer of 10 or more and 10,000 or less, b represents an integer of 1 or more and 3 or less, $R^{13}$and $R^{14}$ each independently represent a hydrogen atom, or an alkyl group, an alkenyl group, an alkoxy group, an aryl group, an aralkyl group, or a halogenated alkyl group having 1 or more and 10 or less carbon atoms.)

In the formula (III), p represents an integer of 10 or more and 10,000 or less, preferably 100 or more and 1,000 or less, and can be appropriately selected so that the viscosity and weight average molecular weight which will be described later are within suitable ranges.

b represents an integer of 1 or more and 3 or less, is preferably 1 or 2, and more preferably 1.
$R^{13}$ and $R^{14}$ each independently represent a hydrogen atom, an alkyl group having 1 or more and 10 or less carbon atoms, an alkenyl group having 2 or more and 10 or less carbon atoms, an alkoxy group having 1 or more and 10 or less carbon atoms, an aryl group having 6 or more and 10 or less carbon atoms, an aralkyl group having 7 or more and 10 or less carbon atoms, or a halogenated alkyl group having 1 or more and 10 or less carbon atoms. A plurality of the $R^{13}$'s may be the same as or different from one another, or when a plurality of the $R^{14}$'s are present, the $R^{14}$'s may be the same as or different from one another.

The number of carbon atoms of the alkyl group is preferably 1 or more and 6 or less, more preferably 1 or more and 3 or less, still more preferably 1 or 2, and still more preferably 1.

The number of carbon atoms of the alkenyl group is preferably 2 or more and 6 or less, more preferably 2 or more and 3 or less, and the alkenyl group is further preferably a vinyl group ($-CH=CH_2$).

The number of carbon atoms of the alkoxy group is preferably 1 or more and 6 or less, more preferably 1 or more and 3 or less, and still more preferably 1 or 2.

The number of carbon atoms of the aryl group is preferably 6 or more and 8 or less, the aryl group may have a substituent such as an alkyl group on the aromatic ring, and examples of the substituent include a phenyl group, a tolyl group (methylphenyl group), a xylyl group (dimethylphenyl group), and a naphthyl group.

The number of carbon atoms of the aralkyl group is preferably 7 or more and 9 or less, and examples of the aralkyl group include a benzyl group, a 2-phenylethyl group, a 2-naphthylethyl group, and a diphenylmethyl group.

The number of carbon atoms of the halogenated alkyl group is preferably 1 or more and 6 or less, and examples of the halogenated alkyl group include a group obtained by substituting a part or all of the hydrogen atoms contained in the alkyl group with a halogen atom such as a fluorine atom, a chlorine atom, a bromine atom, or an iodine atom.

Among them, $R^{13}$ and $R^{14}$ are preferably methyl groups.

The organosilane (a3) is represented by the following formula (I).

$$R^1{}_aSiX_{4-a} \qquad (I)$$

(In the formula (I), $R^1$ represents a substituted or unsubstituted hydrocarbon group having 1 or more and 10 or less carbon atoms, X is a ketoxime group, and a is 0 or 1.)

In the formula (I), a is 0 or 1, and is preferably 1 from the viewpoint of reactivity of the obtained polyorganosiloxane having a methyl isobutyl ketoxime group at both ends.

$R^1$ represents a hydrocarbon group having 1 or more and 10 or less carbon atoms, and is preferably an alkyl group having 1 or more and 10 or less carbon atoms or an alkenyl group having 2 or more and 10 or less carbon atoms.

The number of carbon atoms of the alkyl group is preferably 1 or more and 6 or less, more preferably 1 or more and 3 or less, and still more preferably 1 or 2.

The number of carbon atoms of the alkenyl group is preferably 2 or more and 6 or less, more preferably 2 or more and 3 or less, and the alkenyl group is preferably a vinyl group ($-CH=CH_2$).

Among them, $R^1$ is preferably a vinyl group.

X is preferably a dimethyl ketoxime group, a methyl ethyl ketoxime group, a diethyl ketoxime group, a methyl isopropyl ketoxime group, or a methyl isobutyl ketoxime group.

The polyorganosiloxane (a2) and the organosilane (a3) can be mixed with reference to a stoichiometric ratio, and the organosilane (a3) is preferably added in an excess amount relative to the stoichiometric ratio.

Specifically, an amount of the organosilane (a3) blended relative to 100 parts by mass of the polyorganosiloxane

(a2) is preferably 1 part by mass or more and 25 parts by mass or less, more preferably 3 parts by mass or more, still more preferably 5 parts by mass or more, and more preferably 20 parts by mass or less, still more preferably 15 parts by mass or less.

The weight average molecular weight (Mw) of the curable silicone (a) is, from the viewpoint of improving the coating workability, the curability of the antifouling coating composition, and the strength of the coating film formed, preferably 500 or more and 1,000,000 or less, more preferably 5,000 or more, still more preferably 10,000 or more, still more preferably 15,000 or more, still more preferably 20,000 or more, and more preferably 100,000 or less, still more preferably 50,000 or less, still more preferably 40,000 or less.

The viscosity of the curable silicone (a) at 25°C is, from the viewpoint of improving production workability of the antifouling coating composition and the viewpoints of improving the coating workability and the curability of the antifouling coating composition, and the strength and flexibility of the coating film formed, preferably 20 mPa·s or more and 100,000 mPa s or less, more preferably 100 mPa s or more, still more preferably 500 mPa s or more, still more preferably 1,000 mPa s or more, and more preferably 10,000 mPa s or less, still more preferably 7,000 mPa s or less.

Note that the viscosity of the curable silicone (a) at 25°C is a viscosity measured with a B-type rotational viscometer (for example, model: BM, manufactured by TOKYO KEIKI Inc.).

As described later, when the polyorganosiloxane (a1) or polyorganosiloxane (a2) and silica particles (b) are kneaded, and then added to the antifouling coating composition, the viscosity of the kneaded product is preferably 20 mPa·s or more and 100,000 mPa·s or less, more preferably 100 mPa s or more, still more preferably 500 mPa s or more, still more preferably 1,000 mPa s or more, and more preferably 10,000 mPa·s or less, still more preferably 7,000 mPa·s or less.

The content of the curable silicone (a) in the solid content of the antifouling coating composition is, from the viewpoint of improving the strength of the antifouling coating film formed, preferably 40% by mass or more and 90% by mass or less, more preferably 45% by mass or more, still more preferably 50% by mass or more, and more preferably 88% by mass or less.

Here, the "solid content of the antifouling coating composition" is a component except for an organic solvent (i) described later and a volatile component contained as a solvent in each component, and can be regarded as the antifouling coating film. In addition, the "solid content of the antifouling coating composition" may be calculated by measuring the solid content (heating residue) obtained by drying the coating composition in a hot air dryer at 125°C for 1 hour.

The "content of each component in the antifouling coating film" can be calculated as the content of each component in the residue obtained after subtracting the organic solvent (i) described later, the volatile component contained as the solvent in each component, and a component that is released and volatilized after the curing reaction.

The antifouling coating composition preferably contains other components in addition to the curable silicone (a).

Examples of the other components include the silica particles (b), slipping agent (c), a coloring pigment (d), an organism repellent (e), the organic silicone crosslinking agent (f), the silane coupling agent (g), a curing catalyst (h), the organic solvent (i), a pigment other than the silica particles (b) and the coloring pigment (d), a dehydrating agent other than the organic silicone crosslinking agent (f), the anti-sagging and anti-settling agent, an enzyme, a flame retardant, and a thermal conductivity improver, and the antifouling coating composition preferably contains the silica particles (b), the slipping agent (c), the coloring pigment (d), the organism repellent (e), the organic silicone crosslinking agent (f), the silane coupling agent (g), the curing catalyst (h), and the organic solvent (i).

(Silica particles (b))

From the viewpoint of the hardness, flexibility, and strength of the antifouling coating film formed, the antifouling coating composition preferably contains the silica particles (b), and examples of the silica particles (b) include hydrophobic silica particles (b 1) and hydrophilic silica particles (b2).

The silica particles (b) not only improve physical properties of the antifouling coating film formed, but also improve fluidity and thixotropy of the antifouling coating composition.

The antifouling coating composition preferably contains at least one selected from the group consisting of the hydrophobic silica particles (b1) and the hydrophilic silica particles (b2), preferably contains at least the hydrophobic silica particles (b1), and more preferably contains both the hydrophobic silica particles (b1) and the hydrophilic silica particles (b2).

For a preferred aspect of the silica particles (b) contained in the antifouling coating composition, see paragraphs 0030 to 0037 of WO 2023/054487.

When the antifouling coating composition contains the silica particles (b), the content of the silica particles (b) in the solid content of the antifouling coating composition is, from the viewpoint of improving the strength and hardness of the antifouling coating film formed, preferably 0.1% by mass or more and 20% by mass or less, more preferably 1% by mass or more, and more preferably 10% by mass or less.

The content of the silica particles (b) relative to 100 parts by mass of the curable silicone (a) is, from the viewpoint

of improving the strength and hardness of the antifouling coating film formed, preferably 0.5 parts by mass or more and 30 parts by mass or less, more preferably 1 part by mass or more, and more preferably 20 parts by mass or less, still more preferably 15 parts by mass or less.

(Slipping agent (c))

The antifouling coating composition preferably contains the slipping agent (c) from the viewpoints of the coating workability and antifouling property of the antifouling coating composition.

The slipping agent (c) can impart a slipping property to the antifouling coating film formed to thereby improve adhesion inhibition (antifouling property) of aquatic organisms.

The slipping agent (c) preferably has a fluidity at 25°C, and more preferably is liquid. It is considered that since the slipping agent has fluidity, mobility in the antifouling coating film is high and can enhance an effect of providing slippage to a surface. In addition, the viscosity of the antifouling coating composition can be reduced to improve the applicability.

The slipping agent (c) is preferably one or more selected from oils and polymers having hydrophilic groups, and the slipping agent (c) preferably includes at least one selected from the group consisting of silicone oil (c1), acrylic polymer having hydrophilic groups (c2), and paraffin oil (c3).

For a preferred aspect of the slipping agent (c) and its content contained in the antifouling coating composition, see paragraphs 0038 to 0072 of WO 2023/054487.

[Coloring pigment (d)]

It is also preferred that the antifouling coating composition contains the coloring pigment (d).

By including the coloring pigment (d) in the antifouling coating composition, the strength of the coating film can be increased.

For a preferred aspect of the coloring pigment (d) and its content contained in the antifouling coating composition, see paragraphs 0073 and 0074 of WO 2023/054487.

(Organism repellent (e))

The antifouling coating composition may contain the organism repellent (e) for the purpose of improving the antifouling property of the antifouling coating film formed.

For a preferred aspect of the organism repellent (e) and its content contained in the antifouling coating composition, see paragraph 0078 of WO 2023/054487.

(Organic silicone crosslinking agent (f))

For improving a curing rate, the strength of the antifouling coating film, and adhesion to the substrate, the antifouling coating composition preferably contains the organic silicone crosslinking agent (f). Note that the organic silicone crosslinking agent is not limited to those that aim at such functions, and may be blended, for example, for the purpose of acting as a wetting agent of the pigment.

The organic silicone crosslinking agent (f) has three or four hydrolyzable groups on a silicon atom, and when having three hydrolyzable groups, the organic silicone crosslinking agent (f) is an organic silane further having one hydrocarbon group, and its partially condensed product is also included. Note that compounds corresponding to the organosilane (a3) are excluded.

For a preferred aspect of the organic silicone crosslinking agent (f) and its content contained in the antifouling coating composition, see paragraphs 0079 to 0081 of WO 2023/054487.

(Silane coupling agent (g))

The antifouling coating composition preferably contains a silane coupling agent (g) for the purpose of improving the curing rate, the curability of the antifouling coating film, and the adhesion to the substrate.

The silane coupling agent (g) is an organic alkoxysilane having at least one alkoxy group and at least one organic reactive group on a silicon atom.

The alkoxy group is preferably a methoxy group and an ethoxy group, and more preferably a methoxy group.

The silicon atom is bonded to one to three, preferably two or three, and more preferably three alkoxy groups.

Examples of the organic reactive group include an amino group, a mercapto group, an epoxy group, an isocyanate group, a ureido group, a vinyl group, an acryl group, a methacryl group, and a styryl group. An amino group, a mercapto group, an epoxy group, an isocyanate group, and a ureido group are preferred, an amino group, a mercapto

group, and an epoxy group are more preferred, and an amino group is still more preferred.

As specific examples of the organic reactive group containing an amino group, a 2-(aminoethyl)-3-aminopropyl group and a 3-aminopropyl group are preferred.

In the present embodiment, it is preferable that the antifouling coating composition contains an amino group-containing silane coupling agent, because when the amino group-containing silane coupling agent is contained, it reacts with the epoxy group-containing silane coupling agent contained in the coating composition of the present embodiment, resulting in good adhesion between the coating film formed from the coating composition of the present embodiment and the antifouling coating film formed from the antifouling coating composition.

Examples of the silane coupling agent (g) include 3-(2-aminoethylamino)propyltrimethoxysilane, 3-aminopropyltrimethoxysilane, 3-aminopropyltriethoxysilane, 3-(2-(2-aminoethylamino)ethylamino)propyltrimethoxysilane, 3-glycidoxypropyltrimethoxysilane, 3-isocyanatopropyltrimethoxysilane, 3-mercaptopropyltrimethoxysilane, and N-phenyl-3-aminopropyltrimethoxysilane. 3-(2-aminoethylamino)propyltrimethoxysilane, 3-aminopropyltrimethoxysilane, and 3-aminopropyltriethoxysilane are preferred, and 3-(2-aminoethylamino)propyltrimethoxysilane is more preferred.

As the silane coupling agent (g), condensates of the above compounds may be used. The silane coupling agents (g) may be used alone or in combination of two or more.

When the antifouling coating composition contains the silane coupling agent (g), the content of the silane coupling agent (g) in the solid content of the antifouling coating composition is preferably 0.05% by mass or more and 3% by mass or less, and more preferably 0.1% by mass or more and 1% by mass or less.

The content of the silane coupling agent (g) in the antifouling coating composition relative to 100 parts by mass of the curable silicone (a) is preferably 0.03 parts by mass or more and 3 parts by mass or less, and more preferably 0.1 parts by mass or more and 1 part by mass or less.

For the purpose of improving the curability and strength of the antifouling coating film and the adhesion to the substrate, the antifouling coating composition preferably contains the organic silicone crosslinking agent (f) and/or the silane coupling agent (g), more preferably contains at least the silane coupling agent (g), and still more preferably contains at least the amino group-containing silane coupling agent.

(Curing catalyst (h))

The antifouling coating composition preferably contains a curing catalyst (h) to improve the curing rate and the film strength of the antifouling coating film.

The curing catalyst (h) is preferably a tin compound, a titanium compound, an alkali metal fatty acid salt, and an amine compound, more preferably a titanium compound and an amine compound, and still more preferably a titanium compound.

For a preferred aspect of the curing catalyst (h) and its content contained in the antifouling coating composition, see paragraphs 0086 to 0089 of WO 2023/054487.

[Organic solvent (i)]

The antifouling coating composition may contain the organic solvent (i) for keeping a low viscosity to improve the coating workability.

Examples of the organic solvent (i) include an aromatic hydrocarbon-based organic solvent, an aliphatic hydrocarbon-based organic solvent, an alicyclic hydrocarbon-based organic solvent, a ketone-based organic solvent, and an ester-based organic solvent. An aromatic hydrocarbon-based organic solvent and a ketone-based organic solvent are preferred, and an aromatic hydrocarbon-based organic solvent is more preferred.

Examples of the aromatic hydrocarbon-based organic solvent include toluene, xylene, and mesitylene, and xylene is preferred.

Examples of the aliphatic hydrocarbon-based organic solvent include pentane, hexane, heptane, and octane.

Examples of the alicyclic hydrocarbon-based organic solvent include cyclohexane, methylcyclohexane, and ethylcyclohexane.

Examples of the ketone-based organic solvent include acetyl acetone, acetone, methyl ethyl ketone, methyl isobutyl ketone, and dimethyl carbonate.

Examples of the ester-based organic solvent include ethyl acetate, propyl acetate, butyl acetate, and propylene glycol monomethyl ether acetate.

The organic solvent (i) may be used alone or in combination of two or more.

When the antifouling coating composition contains the organic solvent (i), the content of the organic solvent (i) in the coating composition is, from the viewpoint of improving the coating workability and suppressing sagging during coating and reducing the environmental load, preferably 3% by mass or more and 40% by mass or less, more preferably 10% by mass or more, still more preferably 15% by mass or more, and more preferably 35% by mass or less, and still more

preferably 30% by mass or less.

(Other optional components)

Examples of the pigment other than the silica particles (b) and the coloring pigment (d) include mica, calcium carbonate, barium carbonate, potassium feldspar, kaolin, and glass short fiber, and these inorganic fillers may be used alone or in combination of two or more.
Examples of the dehydrating agent include zeolite, porous alumina, an orthoester such as an orthoformic acid alkyl ester, orthoboric acid, and an isocyanate compound.
Examples of the anti-sagging and anti-settling agent include organic clay-based waxes (such as a stearate salt, a lecithin salt, and an alkyl sulfonate of Al, Ca or Zn), organic waxes (such as polyethylene wax, oxidized polyethylene wax, amide wax, polyamide wax, and hydrogenated castor oil wax), and a mixture of an organic clay-based wax and an organic wax.
Examples of the enzyme include serine protease, cysteine protease, metalloproteinase, cellulase, hemicellulase, pectinase, and glycosidase.
Examples of the flame retardant include antimony oxide and paraffin oxide.
Examples of the thermal conductivity improver include boron nitride and aluminum oxide.

(Aspect of antifouling coating composition)

The antifouling coating composition may be a single-pack type antifouling coating composition in which the components are contained in one composition or may be a multipack type antifouling coating composition in which the components are contained in two or more composition which are mixed before application. From the viewpoints of preventing denaturation during storage, the multipack type antifouling coating composition is preferred, and from the viewpoint of the coating workability, the single-pack type antifouling coating composition is preferred.
Examples of the multipack type antifouling coating composition include a two-pack type antifouling coating composition and a three or more-pack, multipack type antifouling coating composition. From the viewpoint of the coating workability, the two-pack type antifouling coating composition is preferred, and from the viewpoint of preventing denaturation during storage, the three or more-pack, multipack type antifouling coating composition is preferred.
When the antifouling coating composition is the multipack type antifouling coating composition, it is preferred that the polyorganosiloxane (a2) is contained in a different pack from the organosilane (a3), the organic silicone crosslinking agent (f), the silane coupling agent (g), and the curing catalyst (h), and it is more preferred that the silane coupling agent (g) is contained in a further different pack from the organosilane (a3), the organic silicone crosslinking agent (f), and the curing catalyst (h).
The silica particles (b), the coloring pigment (d), and the organism repellent (e) are preferably contained in the same pack as the polyorganosiloxane (a1) or the polyorganosiloxane (a2).
Note that the content of each component in the antifouling coating composition of the present invention is a content relative to the total amount of all the compositions even in the case of a multipack type antifouling coating composition.

(Method for producing antifouling coating composition)

The antifouling coating composition is preferably produced as follows.
Firstly, the method preferably has a step of kneading the polyorganosiloxane (a1) or the polyorganosiloxane (a2) and the silica particles (b). Heat may be applied during or after kneading. By previously kneading the components, affinity between the two components is improved and aggregation of silica and an increase in the viscosity of the coating composition can be suppressed.
The heating conditions are preferably 100°C or higher, more preferably 100°C or higher and 300°C or lower, and still more preferably 140°C or higher and 200°C or lower. The pressure is preferably normal pressure or reduced pressure, and the treatment time is preferably 3 hours or more and 30 hours or less.
The antifouling coating composition can be obtained by mixing and stirring the components blended.
When the antifouling coating composition is the single-pack type antifouling coating composition, the antifouling coating composition is obtained by appropriately adding the curable silicone (a) and the silica particles (b), the slipping agent (c), the coloring pigment (d), the organism repellent (e), the organic silicone crosslinking agent (f), the silane coupling agent (g), the curing catalyst (h), and the organic solvent (i) which are optional components, and mixing and stirring the added components.
When the antifouling coating composition is the multipack type antifouling coating composition, the polyorganosiloxane (a2) is preferably contained in a different pack from the organosilane (a3), the organic silicone crosslinking

agent (f), the silane coupling agent (g), and the curing catalyst (h). In the case of the three or more-pack, multipack type antifouling coating composition, the silane coupling agent (g) is preferably contained in a further different pack from the organic silicone crosslinking agent (f) and the curing catalyst (h).

The silica particles (b), the coloring pigment (d), and the organism repellent (e) are preferably contained in the same pack as the polyorganosiloxane (a1) and/or the polyorganosiloxane (a2).

The slipping agent (c) may be contained in any pack, and the silicone oil (c1), the acrylic polymer having a hydrophilic group (c2), and the paraffin oil (c3) are preferably contained in the pack that contains the polyorganosiloxane (a1) and/or the polyorganosiloxane (a2).

The mixing and stirring is preferably performed at a temperature of 0°C or higher and 50°C or lower.

<Antifouling coating film>

The antifouling coating film is the antifouling coating film formed from the antifouling coating composition described above. The antifouling coating film can be formed by applying or impregnating the above-mentioned antifouling coating composition on the coating film formed by applying or impregnating at least the coating composition of the present embodiment on the substrate and then dried , and then drying and curing the resulting antifouling coating composition..

The antifouling coating film is preferably an antifouling coating film used for the purpose of preventing the substrate from fouling with aquatic organisms in water.

The coating composition of the present embodiment is preferably for an undercoat layer formed on a coating film selected from the group consisting of the old antifouling coating film and a single-pack type or a two-pack type epoxy-based coating film, and it is preferable to provide the above-mentioned antifouling coating composition containing the curable silicone on the undercoat layer.

<Old antifouling coating film>

The old antifouling coating film refers to an antifouling coating film that has been used and that needs to be provided with an antifouling coating film different from the old antifouling coating film. That is, the old antifouling coating film is an antifouling coating film that serves as an underlayer when a new antifouling coating film is formed on the old antifouling coating film.

The old antifouling coating film is not particularly limited, and the antifouling coating film is preferably a self-polishing antifouling coating film, and an example of the antifouling coating film is a self-polishing antifouling coating film containing a hydrolyzable polymer having a silyl ester group or a hydrolyzable polymer having a metal ester group, as described in Japanese Patent No. 5033133.

<Epoxy-based undercoat coating>

An example of the epoxy-based coating film is a two-pack type epoxy resin-based undercoat coating film described in Japanese Patent No. 4271280.

[Substrate with antifouling coating film and its production method]

The substrate with the antifouling coating film of the present embodiment has, in this order, the substrate, the single-pack type or the two-pack type epoxy-based undercoat coating film, optionally the old antifouling coating film, the coating film formed from the coating composition of the present embodiment, and the antifouling coating film formed from the antifouling coating composition containing the curable silicone.

That is, the substrate with the antifouling coating film of the present embodiment preferably has, in this order, the substrate, the single-pack type or the two-pack type epoxy-based undercoat coating film, the coating film formed from the coating composition of the present embodiment, and the antifouling coating film formed from the antifouling coating composition containing the curable silicone, or preferably has, in this order, the substrate, the single-pack type or the two-pack type epoxy-based undercoat coating film, the old antifouling coating film, the coating film formed from the coating composition of the present embodiment, and the antifouling coating film formed from the antifouling coating composition containing the curable silicone. In the former case, the coating film formed from the coating composition of the present embodiment has the single-pack type or the two-pack type epoxy-based undercoat coating film as the lower layer, and the antifouling coating film formed from the antifouling coating composition containing the curable silicone as the upper layer. In the latter case, the coating film formed from the coating composition of the present embodiment has the old antifouling coating film as the lower layer, and the antifouling coating film formed from the antifouling coating composition containing the curable silicone as the upper layer.

The method for producing the substrate with the antifouling coating film preferably includes the following steps (1)

to (4).

Step (1): a step of applying or impregnating the coating composition of the present embodiment on a substrate provided with the single-pack type or the two-pack type epoxy-based undercoat coating film and optionally the old antifouling coating film, to obtain an applied body or an impregnated body
Step (2): a step of drying the applied body or the impregnated body obtained in the step (1) to form a coating film
Step (3): a step of applying or impregnating the antifouling coating composition containing the curable silicone on the coating film, to obtain an applied body or an impregnated body
Step (4): a step of drying and curing the applied body or the impregnated body obtained in the step (3) to form a coating film

<Steps (1) and (3)>

The step (1) is the step of applying or impregnating the coating composition of the present embodiment on the substrate provided with the single-pack type or the two-pack type epoxy-based undercoat coating film and optionally the old antifouling coating film, to obtain the applied body or the impregnated body, and the step (3) is the step of applying or impregnating the antifouling coating composition containing the curable silicone on the coating film formed from the coating composition of the present embodiment, to obtain the applied body or the impregnated body.
The steps (1) and (3) are preferably steps of obtaining the coated body by application.
Examples of a method for applying the coating composition of the present embodiment or the antifouling coating composition containing the curable silicone include known methods such as brush coating, roller coating, spray coating, roll coater coating, flow coater coating, slit coater coating, gravure coater coating, spin coater coating, curtain roll coater coating, electrostatic coating, immersion coating, silk printing, and spin coating.
The thickness of the coating film formed in the steps (1) and (3) is set so that the coating film finally formed has a thickness described later. The coating film may be formed by one coating operation, or may be formed by two or more coating operations (two or more applications).
The thickness of the coating film formed from the coating composition of the present embodiment is not particularly limited, and is preferably 5 μm or more and 1,000 μm or less, more preferably 10 μm or more, still more preferably 50 μm or more, and more preferably 500 μm or less, and still more preferably 300 μm or less. When the coating film has such an aspect, it is preferable because it has excellent adhesion to the upper and lower layers.
The thickness of the antifouling coating film is not particularly limited, and is preferably 5 μm or more and 1,000 μm or less, more preferably 10 μm or more, still more preferably 50 μm or more, and more preferably 500 μm or less, still more preferably 300 μm or less. When the antifouling coating film has such an aspect, the antifouling coating film superior in long-term antifouling property is obtained.

<Steps (2) and (4)>

The step (2) is a step of drying the applied body or the impregnated body obtained in the step (1) to form the coating film, and step (4) is a step of drying and curing the applied body or the impregnated body obtained in the step (3) to form the coating film.
The applied body or the impregnated body obtained by the above-mentioned method can be dried, or dried and cured, for example by being left under conditions of 23°C, preferably for 0.5 to 14 days, more preferably for 1 to 10 days, to obtain the coating film.
Note that the drying and curing described above may be performed under heating and/or air blowing.
Here, the substrate is not particularly limited, and is preferably a substrate brought into contact with seawater or fresh water, more preferably at least one selected from a ship, an underwater structure, a fishing material, a water supply or drainage pipe, and an equipment used on or under water, more preferably the ship and the underwater structure, and particularly preferably the ship. Specific examples thereof include ships (examples: an outside shell of a ship hull, in particular, a part from a waterline to a bottom of the ship, of a large scale steel ship such as a container ship or a tanker, a fishing boat, an FRP boat, a wooden vessel, a yacht, and the like, including both a newly built ship and a repaired ship), underwater structures (examples: a petroleum pipeline, a water conduit, a water circulation pipe, a water supply or drainage port for a factory and a thermal power or nuclear power plant, a submarine cable, seawater utilization equipment (such as a seawater pump), a mega-float, a coastal road, an undersea tunnel, seaport equipment, and structures for various underwater civil engineering works in a canal, a water channel, and the like), fishing materials (examples: a rope, a fishing net, a fishing gear, a float, and a buoy), a water supply or drainage pipe for seawater and the like in a factory, a thermal power or nuclear power plant, or the like, and equipment used in or on water (such as a solar power generation panel, an observation window of meters and equipment, a camera lens, an underwater light, and an underwater sensor).
The material of the substrate is not particularly limited. Particularly in ships, examples thereof include a steel,

aluminum, wood, FRP, glass, and plastic, and in the equipment used on or under water, examples thereof include glass and plastic.

The substrate may also be treated with another treating agent such as an antirust agent.

[Examples]

The present invention will be more specifically described below based on Examples, but the present invention is not to be limited to the Examples.

[Synthesis of acrylic resin]

<Synthesis of acrylic resin solution (a-1)>

Into a reactor, 17.5 parts by mass of xylene (Xy) and 17.5 parts by mass of butyl acetate were charged as a solvent to obtain a mixed solution. The mixed solution was heated to 115°C (reaction temperature) under a nitrogen stream, and then a mixed solution of 100 parts by mass of monomer components (styrene: 1.0 part by mass, methyl methacrylate (MMA): 43.0 parts by mass, n-butyl acrylate (BA): 38.0 parts by mass, 2-hydroxyethyl methacrylate (2-HEMA): 11.0 parts by mass, and methacrylic acid (MAA): 7.0 parts by mass) and 0.5 parts by mass of initiator (t-butylperoxy-2-ethylhexanoate) was added dropwise over a period of 3 hours while maintaining the temperature inside the reactor at 115°C. After the dropwise addition, the mixed solution was kept at 115°C for 1 hour, and 0.4 parts by mass of t-butylperoxy-2-ethylhexanoate and 0.4 parts by mass of t-butylperoxybenzoate were added and kept at the same temperature for 2 hours to prepare an acrylic resin solution (a-1). The acrylic resin contained in the acrylic resin solution (a-1) is referred to as acrylic resin (A-1), and the same applies hereinafter.

<Synthesis of acrylic resin solutions (a-2) to (a-7)>

Acrylic resin solutions (a-2) to (a-7) were prepared in the same manner as for the synthesis of the acrylic resin solution (a-1), except that the mixed solution of monomer components used was changed to composition shown in Table 1.

Abbreviations in Table 1 are as follows.

St: styrene
MMA: methyl methacrylate
BMA: n-butyl methacrylate
BA: n-butyl acrylate
2-HEMA: 2-hydroxyethyl methacrylate
MAA: methacrylic acid

The following measurements were performed on the obtained acrylic resin solution.

(Weight average molecular weight (Mw) of acrylic resin)

The weight average molecular weight (Mw) of the acrylic resin was measured using GPC under the following conditions. The measurement conditions are as follows.

GPC conditions

Apparatus: "HLC-8220GPC" (manufactured by Tosoh Corporation)
Column: "TSKgel Super H2000" and "TSKgel Super H4000" connected (both manufactured by Tosoh Corporation, 6 mm (inner diameter)×15 cm (length))
Eluent: tetrahydrofuran (THF)
Flow rate: 0.500 mL/min
Detector: RI
Column thermostatic bath temperature: 40°C
Standard material: polystyrene
Sample preparation method: THF was added to the polymer solution and filtered through a membrane filter to obtain a sample for GPC measurement.

(Measurement of solid content)

The acrylic resin solution was dried in a hot air dryer at 108°C for 3 hours, after which the heating residue (synonymous with the "solid content") was measured, and the solid content ratio in the acrylic resin solution was calculated using the following formula.

Solid content ratio in acrylic resin solution (% by mass) = (mass of the heating residue/mass of resin solution before heating)×100 (%)

(Measurement of acid value)

The acid value of the acrylic resin is measured as follows.
Five g of the acrylic resin solution was accurately weighed into a conical beaker, 30 to 50mL of a toluene/ethanol = 7/3 (volume ratio) mixed solution was added to dissolve the resin solution, and 2 drops of phenolphthalein-ethanol solution were added as an indicator, and was titrated with an N/10 potassium hydroxide-ethanol solution. The end point of the titration was when the redness of the solution did not disappear for 30 seconds, and the acid value of the acrylic resin solution was calculated using the following formula.

$$\text{Acid value } (AV_R) \text{ of acrylic resin solution } = (B\times f\times 5.61)/S$$

(B: amount of 0.1mol/L potassium hydroxide-ethanol solution used (mL), f: factor of 0.1 mol/L potassium hydroxide-ethanol solution, S: mass (g) of resin solution)
The acid value calculated in terms of the solid content was calculated from the calculated acid value of the acrylic resin solution and the solid content ratio.

Acid value (solid content) = $AV_R$ ÷ (solid content ratio (% by mass) in acrylic resin solution/100)

(Measurement of hydroxyl value)

The hydroxyl value of acrylic resin is measured as follows.
Five g of acrylic resin solution was accurately weighed into a flat-bottom flask, and 5 mL of acetylation reagent (25 g of acetic anhydride added with pyridine to make a total of 100 mL) was added. Similarly, 5 mL of acetylation reagent alone was weighed into a flat-bottom flask as a blank measurement. These flat-bottom flasks were heated at 100°C for 1 hour. After cooling, 1 mL of water was added and heated at 100°C for 10 minutes. After cooling, 5 mL of ethanol and 30 to 50 mL of THF were added to dissolve the resin solution, and 2 drops of phenolphthalein-ethanol solution were added as the indicator, and titrated with an N/2 potassium hydroxide-ethanol solution. The end point of the titration was when the redness of each solution did not disappear for 30 seconds, and the hydroxyl value of the acrylic resin solution was calculated using the following formula.

$$\text{Hydroxyl value } (A_R) \text{ of acrylic resin solution} = [\{(C_0\text{-}C)\times f\times 28.05\}/S] + AV_R$$

($C_0$: titration amount for blank (mL), C: titration amount of 0.5 mol/L potassium hydroxide-ethanol solution (mL), f: factor of 0.5 mol/L potassium hydroxide-ethanol solution, S: mass of resin solution (g), $AV_R$: acid value)
The hydroxyl value calculated in terms of the solid content was calculated from the calculated hydroxyl value of the acrylic resin solution and the solid content ratio.

Hydroxyl value (solid content) = $A_R$ ÷ (solid content ratio (% by mass) in acrylic resin solution/100)

[Table 1]

| | | Acrylic resin solutions | | | | | | |
|---|---|---|---|---|---|---|---|---|
| | | a-1 | a-2 | a-3 | a-4 | a-5 | a-6 | a-7 |
| Monomer composition (part by mass) | St | 1.0 | 1.0 | 1.0 | 51.2 | | 1.0 | 1.0 |
| | MMA | 43.0 | 46.0 | 48.0 | | | 50.0 | 59.0 |
| | BMA | | | | 17.0 | 26.0 | | |
| | BA | 38.0 | 38.0 | 38.0 | 17.0 | 17.5 | 38.0 | 38.0 |
| | 2-HEMA | 11.0 | 11.0 | 11.0 | 13.0 | 24.0 | 11.0 | |
| | MAA | 7.0 | 4.0 | 2.0 | 1.8 | 0.5 | | 2.0 |
| Total | | 100.0 | 100.0 | 100.0 | 100.0 | 100.0 | 100.0 | 100.0 |
| Resin characteristic values | Resin acid value, Solid content (mgKOH/g) | 45.6 | 26.1 | 13.0 | 11.7 | 3.3 | 0.0 | 13.0 |
| | Resin acid value, Varnish (mgKOH/g) | 29.6 | 16.9 | 8.5 | 7.6 | 2.1 | 0.0 | 8.5 |
| | Resin hydroxyl value, Solid content (mgKOH/g) | 47.4 | 47.4 | 47.4 | 56.0 | 103.4 | 47.4 | 0.0 |
| | Resin hydroxyl value, Varnish (mgKOH/g) | 30.8 | 30.8 | 30.8 | 36.4 | 67.2 | 30.8 | 0.0 |
| | Mw | 11,900 | 12,200 | 11,600 | 27,000 | 15,000 | 12,000 | 12,300 |
| composition (% by mass) | Resin (% by mass) | 65.0 | 65.0 | 65.0 | 65.0 | 65.0 | 65.0 | 65.0 |
| | Xylene | 17.5 | 17.5 | 17.5 | 17.5 | 17.5 | 17.5 | 17.5 |
| | Butyl acetate | 17.5 | 17.5 | 17.5 | 17.5 | 17.5 | 17.5 | 17.5 |

[Production of coating composition]

< Components of coating composition>

Components used in the coating composition are shown in Table 2.

[Table 2]

| | | Manufacturer name | Product name | Remarks |
|---|---|---|---|---|
| A' | Solvine AL | Nissin Chemical Industry Co., Ltd | Solvine AL | Vinyl chloride-vinyl acetate copolymer resin |
| B | KBM-403 | Shin-Etsu Chemical Co., Ltd. | KBM-403 | Silane coupling agent (containing epoxy group) |
| B' | KBM-603 | Shin-Etsu Chemical Co., Ltd. | KBM-603 | Silane coupling agent (containing amino group) |
| C | FC-1 Talc | Fukuoka Talc Co., Ltd. | FC-1 Talc | Talc |
| C | Mica powder 325 mesh | Fukuoka Talc Co., Ltd. | Mica powder 325 mesh | Mica |
| C | Barico 300W | HAKUSUI TECH CO., LTD. | Barico 300W | Barium sulfate |
| C | TITONE R-5N | SAKAI CHEMICAL INDUSTRY CO., LTD. | TITONE R-5N | Titanium White |

(continued)

| | | Manufacturer name | Product name | Remarks |
|---|---|---|---|---|
| D | DISPARLON A630-20X | Kusumoto Chemicals, Ltd. | DISPARLON A630-20X (solid content 20%) | Thixotropic agent, solid content 20% |
| D | DISPARLON 4200-20 | Kusumoto Chemicals, Ltd. | DISPARLON 4200-20 (solid content 20%) | Thixotropic agent, solid content 20% |
| - | BYK-065 | BYK | BYK-065 | Antifoaming agent, solid content 0.7% |
| - | Versatic acid | JER | Versatic acid | C10 carboxylic acid |
| E | Xylene | Mitsubishi Shoji Chemical Corporation | Xylene | Industrial grade |
| E | Butyl acetate | KH Neochem Co., Ltd. | Butyl acetate | Industrial grade |
| E | Methyl isobutyl ketone | Mitsubishi Chemical Corporation | Methyl isobutyl ketone (MIBK) | Industrial grade |
| E | Dimethyl carbonate | SANKYO CHEMICAL CO., LTD. | DMC | Industrial grade |
| E | Solvesso No.100 | Tonen General Sekiyu K.K. | T-SOL 100 FLUID | Industrial grade |

Components were blended according to the blending amounts (parts by mass) shown in Table 3, and mixed and stirred to obtain coating compositions (Examples 1 to 8 and Comparative Examples 1 to 11).

[Evaluation]

The resulting coating composition was subjected to the following evaluations.

<Viscosity>

The viscosity (unit: KU) was measured at a liquid temperature of 25°C using a Stormer viscometer (KU-2, manufactured by Brookfield).

<Adhesion test 1: Adhesion to undercoat epoxy coating film>

A sandblasted steel plate (length 300 mm×width 100 mm×thickness 2.3 mm) was coated with an epoxy resin-based anticorrosion coating material (product name "BANNOH 500", manufactured by Chugoku Marine Paints, Ltd.) using a spray coater so as to have a dry film thickness of 150 μm, and was dried at a normal temperature (hereinafter, 23°C) for 24 hours. Subsequently, the resulting plate was coated with an epoxy resin-based binder (product name "CMP BIOCLEAN SG-R", manufactured by Chugoku Marine Paints, Ltd.) using a spray coater so as to have a dry film thickness of 100 μm and was dried at the normal temperature for 24 hours.

Then, the coating composition of each of the Examples and Comparative Examples was sufficiently mixed and then applied onto the undercoat coating film so as to have a dry film thickness of 50 μm using a spray coater, and after one week at the normal temperature, a test plate with coating film was prepared.

The prepared test plates with coating film were used to evaluate the adhesion in accordance with the cross-cut method (spacing of cross-cut: 2 mm) of JIS K 5600-5-6:1999 on a six-level scale from 0 to 5 as specified in JIS K 5600-5-6:1999. A smaller number indicates better adhesion. The results are shown in Table 3.

<Adhesion test 2: Adhesion to undercoat self-polishing antifouling coating material (old antifouling coating film)>

A sandblasted steel plate (length 300 mm×width 100 mm×thickness 2.3 mm) was coated with an epoxy resin-based anticorrosion coating material (product name "BANNOH 500", manufactured by Chugoku Marine Paints, Ltd.) using a spray coater so as to have a dry film thickness of 150 μm, and was dried at a normal temperature (hereinafter, 23°C) for 24 hours. Subsequently, the resulting plate was coated with an epoxy resin-based anticorrosion coating material (product name "BANNOH 500N", manufactured by Chugoku Marine Paints, Ltd.) using a spray coater so as to have a dry

film thickness of 100 μm, and dried at the normal temperature for 24 hours. Furthermore, the resulting plate was coated with a zinc acrylic polymer-based hydrolysis-type antifouling coating material (self-polishing antifouling coating material) (product name "Sea Grand Prix 500HS", manufactured by Chugoku Marine Paints, Ltd.) using a spray coater so as to have a dry film thickness of 100 μm, and dried at the normal temperature for 7 days to prepare a test plate. The obtained test plates were stationarily immersed in the Bay of Miyajima, Hiroshima Prefecture for six months to form the old antifouling coating film.

Then, the coating composition of each of the Examples and Comparative Examples was sufficiently mixed and then applied onto the coating film (old antifouling coating film) formed by the self-polishing antifouling coating material using a spray coater so as to have a dry film thickness of 50 μm, and after one week at the normal temperature, a test plate with coating film was prepared.

Adhesion was evaluated using the obtained test plates by the cross-cut method, in the same manner as in <Adhesion test 1: Adhesion to undercoat epoxy coating film>.

<Adhesion tests 3 and 4: Adhesion to topcoat silicone-based antifouling coating film>

A sandblasted steel plate (length 300 mm×width 100 mm×thickness 2.3 mm) was coated with an epoxy resin-based anticorrosion coating material (product name "BANNOH 500", manufactured by Chugoku Marine Paints, Ltd.) using a spray coater so as to have a dry film thickness of 150 μm, and was dried at a normal temperature (hereinafter, 23°C) for 24 hours. Subsequently, the resulting plate was coated with an epoxy resin-based anticorrosion coating material (product name "CMP Bioclean SG-R", manufactured by Chugoku Marine Paints, Ltd.) using a spray coater so as to have a dry film thickness of 100 μm, and dried at the normal temperature for 24 hours. Then, the coating composition of each of the Examples and Comparative Examples was sufficiently mixed, and then applied onto the resulting plate using a spray coater so as to have a dry film thickness of 50 μm, and dried at the normal temperature for 24 hours. Then, in the adhesion test 3, the resulting plate was coated with a silicone resin-based antifouling coating material A using a spray coater so as to have a dry film thickness of 150 μm, and dried at the normal temperature for 7 days to prepare a test plate with coating film. In the adhesion test 4, a test plate with coating film was prepared in the same manner as in the adhesion test 3, except that a silicone resin-based antifouling coating material B was used instead of the silicone resin-based antifouling coating material A.

The silicone resin-based antifouling coating material A used in the adhesion test 3 is the antifouling coating composition described in Example 6 of WO 2023/054487, and the silicone resin-based antifouling coating material B used in the adhesion test 4 is the antifouling coating composition described in Example 1 of WO 2023/054487.

The obtained test plate was immersed in the Bay of Miyajima, Hiroshima Prefecture for 3 months, and then the adhesion to the topcoat silicone-based antifouling coating film was evaluated by the following method.

The silicone-based antifouling coating film on a surface of the coating film of the test plate was made a single cut using a single blade defined in JIS K 5600-5-6, and the surface was rubbed with a paper rag in a direction perpendicular to the cut. The degree of occurrence of delamination with the coating film formed from the coating composition of the Examples and Comparative Examples was evaluated according to the following criteria. The results are shown in Table 3 below.

0: No damage to the coating film other than the cut was observed.
1: Slight damage to the coating film was observed around the cut, but no other damage was observed.
2: Delamination of the coating film was observed around the cut, but the delamination did not extend any further.
3: Delamination occurred within a range of less than 10 mm from the cut.
4: Delamination occurred within a range of 10 mm or more from the cut.
5: The coating film is no longer present.

[Table 3]

| | | Examples | | | | | | | |
|---|---|---|---|---|---|---|---|---|---|
| | | 1 | 2 | 3 | 4 | 5 | 6 | 7 | 8 |
| A’ | Acrylic resin (A-1) | | | | | | | | |
| A | Acrylic resin (A-2) | 40 | 20 | | | | | | |
| A | Acrylic resin (A-3) | | | 40 | | | | 25 | 25 |
| A | Acrylic resin (A-4) | | | | 40 | 30 | 20 | | |
| A' | Acrylic resin (A-5) | | | | | | | | |
| A' | Acrylic resin (A-6) | | | | | | | | |
| A' | Acrylic resin (A-7) | | | | | | | | |
| A' | Solvine AL | | 10 | | | | 10 | 5 | 5 |
| C | FC-1 Talc | 4.3 | 4.3 | 4.3 | 4.3 | 4.3 | 4.3 | 4.3 | 4.3 |
| C | Mica powder 325 mesh | 3.4 | 3.4 | 3.4 | 3.4 | 3.4 | 3.4 | 3.4 | 3.4 |
| C | Barico 300W | 1.7 | 1.7 | 1.7 | 1.7 | 1.7 | 1.7 | 1.7 | 1.7 |
| C | TITONE R-5N | 12 | 12 | 12 | 12 | 12 | 12 | 12 | 12 |
| D | DISPARLON 4200-20 | 2.2 | 2.2 | 2.2 | 2.2 | 2.2 | 2.2 | 2.2 | 2.2 |
| D | DISPARLON A630-20X | 1.5 | 1.5 | 1.5 | 1.5 | 1.5 | 1.5 | 1.5 | 1.5 |
| - | BYK-065 | 0.2 | 0.2 | 0.2 | 0.2 | 0.2 | 0.2 | 0.2 | 0.2 |
| E | Xylene | 26.7 | 26.7 | 26.7 | 19.5 | 23 | 29.5 | 29.5 | 22 |
| E | Methyl isobutyl ketone | | 10 | | | | 7.2 | 7.2 | 7.2 |
| E | Dimethyl carbonate | | | | 7.2 | 13.7 | | | |
| E | Solvesso 100 | 3 | 3 | 3 | 3 | 3 | 3 | 3 | 3 |
| B | KBM-403 | 5 | 5 | 5 | 5 | 5 | 5 | 5 | 12.5 |
| B' | KBM-603 | | | | | | | | |
| - | Versatic acid | | | | | | | | |
| Total | | 100 | 100 | 100 | 100 | 100 | 100 | 100 | 100 |
| Solid content (% by mass) | | 53.1 | 50.1 | 53.1 | 53.1 | 46.6 | 50.1 | 48.4 | 55.9 |
| Acrylic resin content in the solid content (% by mass) | | 48.9 | 25.9 | 48.9 | 48.9 | 41.8 | 25.9 | 33.6 | 29.1 |
| Epoxy group-containing silane coupling agent content in the solid content (% by mass) | | 9.4 | 10.0 | 9.4 | 9.4 | 10.7 | 10.0 | 10.3 | 22.4 |
| VOC (g/L) | | 530.2 | 559.6 | 530.2 | 539.8 | 612.0 | 561.3 | 574.4 | 500.1 |
| VOC (g/L) excluding exempt solvents | | 530.2 | 559.6 | 530.2 | 495.3 | 533.2 | 561.3 | 574.4 | 500.1 |
| Solvent-soluble acid value (mgKOH/g) | | 6.7 | 3.3 | 3.5 | 3.0 | 2.3 | 1.5 | 2.2 | 2.2 |
| Solvent-soluble hydroxyl value (mgKOH/g) | | 12.3 | 6.2 | 12.3 | 14.6 | 10.9 | 7.3 | 7.7 | 7.7 |
| Viscosity (KU) | | 67 | 67 | 67 | 70 | 68 | 73 | 69 | 70 |
| Evaluation | Adhesion test 1 | 1 | 1 | 1 | 1 | 0 | 0 | 0 | 0 |
| | Adhesion test 2 | 1 | 1 | 1 | 1 | 1 | 1 | 1 | 1 |
| | Adhesion test 3 | 2 | 1 | 1 | 0 | 0 | 0 | 0 | 0 |
| | Adhesion test 4 | 0 | 0 | 0 | 0 | 0 | 0 | 1 | 0 |

[Table 3] (continued)

| | | Comparative Examples | | | | | |
|---|---|---|---|---|---|---|---|
| | | 1 | 2 | 3 | 4 | 5 | 6 |
| A’ | Acrylic resin (A-1) | | 40 | | | | |
| A | Acrylic resin (A-2) | | | | | | |
| A | Acrylic resin (A-3) | | | | | 50 | |
| A | Acrylic resin (A-4) | 50 | | | | | 15 |
| A' | Acrylic resin (A-5) | | | 30 | | | |
| A' | Acrylic resin (A-6) | | | | 40 | | |
| A' | Acrylic resin (A-7) | | | | | | |
| A' | Solvine AL | | | | | | 10 |
| C | FC-1 Talc | 4.3 | 4.3 | 4.3 | 4.3 | 4.3 | 4.3 |
| C | Mica powder 325 mesh | 3.4 | 3.4 | 3.4 | 3.4 | 3.4 | 3.4 |
| C | Barico 300W | 1.7 | 1.7 | 1.7 | 1.7 | 1.7 | 1.7 |
| C | TITONE R-5N | 12 | 12 | 12 | 12 | 12 | 12 |
| D | DISPARLON 4200-20 | 2.2 | 2.2 | 2.2 | 2.2 | 2.2 | 2.2 |
| D | DISPARLON A630-20X | 1.5 | 1.5 | 1.5 | 1.5 | 1.5 | 1.5 |
| - | BYK-065 | 0.2 | 0.2 | 0.2 | 0.2 | 0.2 | 0.2 |
| E | Xylene | 9.5 | 26.7 | 29.5 | 26.7 | 16.7 | 34.5 |
| E | Methyl isobutyl ketone | 7.2 | | 7.2 | | | 7.2 |
| E | Dimethyl carbonate | | | | | | |
| E | Solvesso 100 | 3 | 3 | 3 | 3 | 3 | 3 |
| B | KBM-403 | 5 | 5 | 5 | 5 | 5 | 5 |
| B' | KBM-603 | | | | | | |
| - | Versatic acid | | | | | | |
| Total | | 100 | 100 | 100 | 100 | 100 | 100 |
| Solid content (% by mass) | | 59.6 | 53.1 | 46.6 | 53.1 | 59.6 | 46.9 |
| Acrylic resin content in the solid content (% by mass) | | 54.5 | 48.9 | 41.8 | 48.9 | 54.5 | 20.8 |
| Epoxy group-containing silane coupling agent content in the solid content (% by mass) | | 8.4 | 9.4 | 10.7 | 9.4 | 8.4 | 10.7 |
| VOC (g/L) | | 462.6 | 530.2 | 587.2 | 530.2 | 466.2 | 591.9 |
| VOC (g/L) excluding exempt solvents | | 462.6 | 530.2 | 587.2 | 530.2 | 466.2 | 591.9 |
| Solvent-soluble acid value (mgKOH/g) | | 3.8 | 11.8 | 1.7 | 0.0 | 4.4 | 1.1 |
| Solvent-soluble hydroxyl value (mgKOH/g) | | 18.2 | 12.3 | 20.2 | 12.3 | 15.4 | 5.5 |
| Viscosity (KU) | | 76 | 74 | 64 | 68 | 77 | 95 |
| Evaluation | Adhesion test 1 | 1 | 1 | 0 | 0 | 1 | 1 |
| | Adhesion test 2 | 1 | 3 | 1 | 1 | 3 | 1 |
| | Adhesion test 3 | 4 | 0 | 4 | 4 | 0 | 4 |
| | Adhesion test 4 | 0 | 0 | 4 | 4 | 0 | 4 |

[Table 3] (continued)

| | | Comparative Examples | | | | |
|---|---|---|---|---|---|---|
| | | 7 | 8 | 9 | 10 | 11 |
| A' | Acrylic resin (A-1) | | | | | |
| A | Acrylic resin (A-2) | | | | | |
| A | Acrylic resin (A-3) | 25 | 25 | 25 | | |
| A | Acrylic resin (A-4) | | | | | |
| A' | Acrylic resin (A-5) | | | | | |
| A' | Acrylic resin (A-6) | | | | 25 | |
| A' | Acrylic resin (A-7) | | | | | 40 |
| A' | Solvine AL | 5 | 5 | 3 | 3 | |
| C | FC-1 Talc | 4.3 | 4.3 | 4.3 | 4.3 | 4.3 |
| C | Mica powder 325 mesh | 3.4 | 3.4 | 3.4 | 3.4 | 3.4 |
| C | Barico 300W | 1.7 | 1.7 | 1.7 | 1.7 | 1.7 |
| C | TITONE R-5N | 12 | 12 | 12 | 12 | 12 |
| D | DISPARLON 4200-20 | 2.2 | 2.2 | 2.2 | 2.2 | 2.2 |
| D | DISPARLON A630-20X | 1.5 | 1.5 | 1.5 | 1.5 | 1.5 |
| - | BYK-065 | 0.2 | 0.2 | 0.2 | 0.2 | 0.2 |
| E | Xylene | 32 | 19.5 | 31.5 | 29.5 | 19.5 |
| E | Methyl isobutyl ketone | 7.2 | 7.2 | 7.2 | 7.2 | 7.2 |
| E | Dimethyl carbonate | | | | | |
| E | Solvesso 100 | 3 | 3 | 3 | 3 | 3 |
| B | KBM-403 | 2.5 | 15 | | 5 | 5 |
| B' | KBM-603 | | | 5 | | |
| - | Versatic acid | | | | 2 | |
| Total | | 100 | 100 | 100 | 100 | 100 |
| Solid content (% by mass) | | 45.9 | 58.4 | 46.4 | 48.4 | 53.1 |
| Acrylic resin content in the solid content (% by mass) | | 35.4 | 27.8 | 35.0 | 33.6 | 48.9 |
| Epoxy group-containing silane coupling agent content in the solid content (% by mass) | | 5.4 | 25.7 | 0.0 | 10.3 | 9.4 |
| VOC (g/L) | | 598.5 | 474.7 | 590.1 | 570.2 | 526.1 |
| VOC (g/L) excluding exempt solvents | | 598.5 | 474.7 | 590.1 | 570.2 | 526.1 |
| Solvent-soluble acid value (mgKOH/g) | | 2.2 | 2.2 | 2.2 | 6.4 | 3.4 |
| Solvent-soluble hydroxyl value (mgKOH/g) | | 7.7 | 7.7 | 7.7 | 7.7 | 0.0 |
| Viscosity (KU) | | 69 | 70 | 69 | 71 | 71 |
| Evaluation | Adhesion test 1 | 1 | 0 | 0 | 3 | 1 |
| | Adhesion test 2 | 1 | 1 | 1 | 1 | 1 |
| | Adhesion test 3 | 3 | 3 | 4 | 0 | 4 |
| | Adhesion test 4 | 3 | 3 | 4 | 1 | 4 |

According to the Examples and Comparative Examples, it can be seen that the coating composition of the present invention provides a coating film having excellent adhesion to the old antifouling coating film as the lower layer and the epoxy-based undercoat coating film, and having excellent adhesion to the antifouling coating film obtained from the antifouling coating composition having the curable silicone as the upper layer.

## Claims

1. A coating composition comprising an acrylic resin (A) having an acid value and an epoxy group-containing silane coupling agent (B), wherein

   the acid value of the acrylic resin (A) is 10 mgKOH/g or more and 35 mgKOH/g or less and a hydroxyl value of the acrylic resin (A) is 10 mgKOH/g or more and 200 mgKOH/g or less,
   a content of the acrylic resin (A) in solid content of the coating composition is 25% by mass or more and 50% by mass or less, and
   a content of the epoxy group-containing silane coupling agent (B) in the solid content of the coating composition is 6% by mass or more and 25% by mass or less.

2. The coating composition according to claim 1, wherein an acid value of a solvent-soluble content of the coating composition is 2 mgKOH/g or more and 10 mgKOH/g or less.

3. The coating composition according to claim 1 or 2, wherein an active hydrogen equivalent (eq) of an epoxy curing agent to an epoxy group equivalent (eq) in the solid content of the coating composition (active hydrogen equivalent/epoxy group equivalent) is 0.05 or less.

4. The coating composition according to any one of claims 1 to 3, wherein the coating composition is for an undercoat layer of an antifouling coating composition containing a curable silicone.

5. The coating composition according to claim 4, wherein the curable silicone is at least one selected from the following (1) and (2):

   (1) a polyorganosiloxane having a ketoxime group at both ends
   (2) a polyorganosiloxane having a hydroxy group at both ends and an organosilane represented by the following formula (I):

$$R^1_aSiX_{4-a} \quad (I)$$

   wherein $R^1$ represents a substituted or unsubstituted hydrocarbon group having 1 or more and 10 or less carbon atoms, X is a ketoxime group, and a is 0 or 1.

6. The coating composition according to claim 5, wherein the curable silicone is a curable silicone of the (1) in claim 5.

7. The coating composition according to any one of claims 4 to 6, wherein the antifouling coating composition contains an amino group-containing silane coupling agent.

8. The coating composition according to any one of claims 1 to 7, wherein the coating composition is for an undercoat layer formed on a coating film selected from the group consisting of an old antifouling coating film and a single-pack type or a two-pack type epoxy-based undercoat coating film.

9. A coating film formed from the coating composition according to any one of claims 1 to 8.

10. A substrate with an antifouling coating film, comprising: a substrate; the coating film according to claim 9; and an antifouling coating film formed from an antifouling coating composition containing a curable silicone, in this order.

11. A substrate with an antifouling coating film, comprising: a substrate, a single-pack type or a two-pack type epoxy-based undercoat coating film, optionally an old antifouling coating film, the coating film according to claim 9, and an antifouling coating film formed from an antifouling coating composition containing a curable silicone, in this order.

12. A method for producing a substrate with an antifouling coating film, comprising the following steps (1) to (4):

   a step (1) of applying or impregnating a substrate with the coating composition according to any one of claims 1 to 8 to obtain an applied body or an impregnated body;
   a step (2) of drying the applied body or the impregnated body obtained in the step (1) to form a coating film;

a step (3) of applying or impregnating the coating film with an antifouling coating composition containing a curable silicone to obtain an applied body or an impregnated body; and
a step (4) of drying and curing the applied body or the impregnated body obtained in the step (3) to form a coating film.

**13.** Use of the coating composition according to any one of claims 1 to 8 for an undercoat layer of an antifouling coating composition containing a curable silicone.

Europäisches Patentamt
European Patent Office
Office européen des brevets

# EUROPEAN SEARCH REPORT

Application Number
EP 25 15 8504

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | JP 2018 178082 A (KANSAI PAINT CO LTD) 15 November 2018 (2018-11-15)<br>* the whole document *<br>* paragraphs [0139], [0180]; claim 1; tables 1-5 * | 1-13 | INV.<br>C09D5/16<br>B05D7/00<br>C09D133/06 |
| A | WO 2023/054487 A1 (CHUGOKU MARINE PAINTS [JP]) 6 April 2023 (2023-04-06)<br>* the whole document *<br>* paragraphs [0101], [0112], [0115]; claim 1 * | 1-13 | |
| A | KR 2009 0073403 A (DPI HOLDINGS CO LTD [KR]) 3 July 2009 (2009-07-03)<br>* the whole document *<br>* claims 1, 2; example 1; table 1 * | 1-13 | |
| A | JP 2006 117797 A (KANSAI PAINT CO LTD) 11 May 2006 (2006-05-11)<br>* the whole document *<br>* manufacture example 1; table 1 *<br>* paragraphs [0050], [0070] * | 1-13 | TECHNICAL FIELDS SEARCHED (IPC)<br>C09D<br>C08F<br>C23D<br>B05D |
| A | US 2013/313888 A1 (UEMURA JUNYA [JP] ET AL) 28 November 2013 (2013-11-28)<br>* the whole document *<br>* paragraphs [0024] - [0028], [0102]; claim 1; examples; table 1 * | 1-13 | |
| A | US 2015/210862 A1 (MATSUDA HIDEKI [JP] ET AL) 30 July 2015 (2015-07-30)<br>* the whole document *<br>* Production example 7; paragraph [0035]; tables 1, 2 * | 1-13 | |

The present search report has been drawn up for all claims

1

| Place of search | Date of completion of the search | Examiner |
|---|---|---|
| Munich | 18 July 2025 | Rangheard, Claudine |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO.

EP 25 15 8504

This annex lists the patent family members relating to the patent documents cited in the above-mentioned European search report. The members are as contained in the European Patent Office EDP file on
The European Patent Office is in no way liable for these particulars which are merely given for the purpose of information.

18-07-2025

| Patent document cited in search report | Publication date | Patent family member(s) | Publication date |
|---|---|---|---|
| JP 2018178082 A | 15-11-2018 | JP 7306793 B2 | 11-07-2023 |
| | | JP 2018178082 A | 15-11-2018 |
| WO 2023054487 A1 | 06-04-2023 | EP 4410905 A1 | 07-08-2024 |
| | | JP 7698051 B2 | 24-06-2025 |
| | | JP WO2023054487 A1 | 06-04-2023 |
| | | KR 20240049325 A | 16-04-2024 |
| | | US 2025002729 A1 | 02-01-2025 |
| | | WO 2023054487 A1 | 06-04-2023 |
| KR 20090073403 A | 03-07-2009 | NONE | |
| JP 2006117797 A | 11-05-2006 | NONE | |
| US 2013313888 A1 | 28-11-2013 | CA 2823158 A1 | 19-07-2012 |
| | | CN 103298568 A | 11-09-2013 |
| | | JP 5922588 B2 | 24-05-2016 |
| | | JP WO2012096331 A1 | 09-06-2014 |
| | | US 2013313888 A1 | 28-11-2013 |
| | | WO 2012096331 A1 | 19-07-2012 |
| US 2015210862 A1 | 30-07-2015 | CN 104395416 A | 04-03-2015 |
| | | JP 6270728 B2 | 31-01-2018 |
| | | JP WO2014181593 A1 | 23-02-2017 |
| | | US 2015210862 A1 | 30-07-2015 |
| | | WO 2014181593 A1 | 13-11-2014 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2017088653 A
- WO 2023054487 A
- JP 5033133 B
- JP 4271280 B